# EUROPÄISCHE PATENTSCHRIFT

(11) **EP 3 910 875 B1**
(45) Veröffentlichungstag und Bekanntmachung des Hinweises auf die Patenterteilung: **18.02.2026**
(21) Anmeldenummer: 21173002.3
(22) Anmeldetag: 10.05.2021
(51) Int. Cl.: H04L 9/00, H04L 9/32

(54) **KONZEPT ZUM AUSTAUSCH VON KRYPTOGRAPHISCHEN SCHLÜSSELINFORMATIONEN**
CONCEPT FOR EXCHANGING CRYPTOGRAPHIC KEY INFORMATION
CONCEPT D'ÉCHANGE DES INFORMATIONS CLÉS CRYPTOGRAPHIQUES

(30) Priorität: 13.05.2020 DE 102020205993
(43) Veröffentlichungstag der Anmeldung: 17.11.2021
(73) Patentinhaber: VOLKSWAGEN AG, 38440 Wolfsburg (DE)
(72) Erfinder: Bartkowiak, Nicolai, 31180 Giesen (DE)

(56) Entgegenhaltungen:
- US-A1- 2017 180 128
- US-A1- 2018 343 238

## Beschreibung

Die vorliegende Erfindung bezieht sich auf computer-implementierte Verfahren, Vorrichtungen und Computerprogramme zum Austausch von kryptographischen Schlüsselinformationen.

Eine in der Kryptografie beliebte Vorgehensweise, an einen Empfänger zu versendende Daten zu verschlüsseln, ohne vorher einen geheimen Schlüssel zu vereinbaren, der auf abhör- und manipulations-sicherem Wege zwischen den beiden Kommunikationspartnern ausgetauscht werden muss, ist die asymmetrische Kryptografie. Hierbei erzeugt jeder Teilnehmer ein Schlüsselpaar aus privatem und öffentlichem Schlüssel.

Wie schon am Namen erkennbar, birgt der öffentliche Schlüssel kein Geheimnis, sondern kann in der Öffentlichkeit verteilt werden (hierfür existieren bspw. öffentliche Schlüsselserver, über die man seinen eigenen öffentlichen Schlüssel der Allgemeinheit zugänglich machen kann).

Möchte nun ein Sender eine Information an einen Empfänger verschlüsselt übertragen, erfragt er bei ihm (oder auf einem der oben beschriebenen öffentlichen Schlüsselserver) den öffentlichen Schlüssel dieser Person, welcher dazu verwendet werden kann, eine Nachricht an ihn (und zwar nur an ihn) zu verschlüsseln.

Das Besondere an der asymmetrischen Kryptografie ist, dass man diese mit dem öffentlichen Schlüssel verschlüsselte Nachricht nur mit dem dazugehörigen privaten Schlüssel entschlüsseln kann. Somit sollte der private Schlüssel eines solchen Schlüsselpaares streng geheim gehalten werden.

Im Unterschied dazu findet bei der symmetrischen Kryptografie die Ver- und Entschlüsselung einer Nachricht mit dem selben Schlüssel statt, so dass bei dieser Art der verschlüsselten Kommunikation ein solcher Schlüssel zuvor auf einem sicheren Kanal (bspw. einem persönlichen Treffen) ausgetauscht werden muss, was zugleich den Vorteil der asymmetrischen Kryptografie beschreibt, da hier aufgrund der Öffentlichkeit des öffentlichen Schlüssels kein solcher gesicherter Austausch stattfinden muss. Möchten zwei Personen untereinander verschlüsselt kommunizieren, müssen beide lediglich den öffentlichen Schlüssel der anderen Person kennen, was in der Regel keine Schwierigkeit darstellt.

Eine weitere Funktionalität der asymmetrischen Kryptografie ist das Signieren von Nachrichten. Möchte der Sender einer Nachricht diese digital unterschreiben, um damit nachzuweisen, dass sie tatsächlich von ihm stammt, kann er diese mit seinem privaten Schlüssel signieren. Der Empfänger kann dann unter Verwendung des öffentlichen Schlüssels des Senders die Signatur der Nachricht überprüfen - also deren Authentizität sicherstellen. Da der private Schlüssel geheim ist, kann der Empfänger relativ sicher sein, dass die Nachricht tatsächlich von der erwarteten Person stammt.

In Zukunft werden mehr und mehr mit einem Netzwerk (wie dem Internet) verbundene Geräte (sog. "IoT-Devices", Geräte des Internet der Dinge, engl. Internet of Things) Daten bereitstellen - wie bspw. in Prozessnetzwerken (wie denen im Kontext von Lieferketten, engl. "Supply Chains"). Eine Herausforderung hierbei kann sein, sicherzustellen, dass die erhaltenen Daten tatsächlich von dem erwarteten Gerät stammen und nicht von einem Sender, der sich lediglich als das Gerät ausgibt, von dem die Daten augenscheinlich zu sein scheinen.

Dies ist in manchen Systemen mit der Anwendung von zertifizierten Signaturen möglich. Soll das IoT-Gerätjedoch einerseits möglichst eigenständig/autonom agieren können und andererseits vor allem Kommunikationsbeziehungen aufbauen und bedienen können, die selbst vom Hersteller des Gerätes (bzw. von der Institution, die das Gerät mit Schlüsselmaterial ausstattet) nicht mehr kompromittiert und mitgelesen werden können, so ist ein sicherer Schlüsseltausch vorzusehen. Handelt es sich in solchen Szenarien lediglich um einige wenige Geräte, kann ein Schlüsselaustausch zwischen zwei Teilnehmern auf herkömmlichem, direktem Wege durchgeführt werden: die beiden Kommunikationsparteien tauschen ihre Schlüssel auf direktem und verfälschungs- und abhörsicherem Wege (wie bspw. einem persönlichen und privaten Treffen) aus. Sind im betroffenen Einsatzszenario jedoch viele Geräte (oder auch "Prozessinstanzen") als Datenlieferanten tätig und sind diese gar nicht mehr im Einzelnen bekannt oder erreichbar, ist diese Vorgehensweise schnell nicht mehr praktikabel. Insbesondere für Szenarien, in denen auch die Anzahl der Empfänger solcher Informationen, oder genereller: der Kommunikationspartner, hoch ist, ergibt sich schnell ein Kommunikationsnetzwerk mit vielen 1:1-Kommunikationsstrecken und gegebenenfalls zusätzlich noch Kommunikationsgruppen, so dass ein Schlüsselaustausch zwischen allen beteiligten Parteien auf direktem und sicherem Wege schnell nicht mehr praktikabel wird.

Eine Anwendung eines solchen Schlüsselaustausches ist die Kommunikation zwischen Fahrzeugen und anderen Verkehrsteilnehmern, oder die Kommunikation zwischen Fahrzeug und Fahrzeughersteller. Wenn den Daten von vernetzten Fahrzeugen oder auch anderer Verkehrsteilnehmer (wie bspw. Verkehrsinfrastruktur) gegenüber in Zukunft uneingeschränktes Vertrauen entgegengebracht werden soll, sollte es eine Möglichkeit geben, Schlüsselmaterial zwischen den Verkehrsteilnehmern gesichert auszutauschen, welches nicht nur den Übertragungsweg über gängige Mechanismen absichert, sondern auch sicherstellt, dass der Sender tatsächlich das Gerät oder die Person ist, als das/die es/sie sich ausgibt. Es kann dabei Konsumenten der Daten ermöglicht werden, deren Herkunft gesichert zu authentifizieren.

Aus US 2018/0343238 A1 ist ein System und Verfahren zur Absicherung von Kommunikation bekannt. Hierbei werden Gerätedaten von einem Gerät mit einem öffentlichen Schlüssel einer Authentifizierungsgegenstelle verschlüsselt und ggf. mit einem privaten Schlüssel des Geräts signiert. Diese Verschlüsselung wird mit Hilfe eines virtuellen Kommunikations-Kernels durchgeführt, der von der Authentifizierungsgegenstelle an das Gerät übermittelt wird und der die Authentifizierung durchführt.

Aus US 2017/0180128 A1 ist ein Verfahren zum Verwalten einer vertrauenswürdigen Identität des Geräts bekannt. In diesem Verfahren wird das Ergebnis der Verifikation der digitalen Identität von einem Aussteller von vertrauenswürdigen Identitäten auf einem Distributed Ledger gespeichert, so dass diese abgerufen werden kann, um von Überprüfungsinstanzen geprüft zu werden.

Es besteht der Bedarf, ein verbessertes Konzept für einen Schlüsselaustausch zwischen verschiedenen Parteien, insbesondere zwischen Verkehrsteilnehmern, bereitzustellen.

Die vorliegende Erfindung wird durch miteinander in Beziehung stehende Verfahren gemäß Ansprüchen 1 und 11 sowie Programmen gemäß Ansprüchen 10 und 13 und sowie Vorrichtungen gemäss Ansprüchen 14 und 15 beschrieben. Bevorzugte Ausführungsformen sind in den abhängigen Ansprüchen definiert.

Ausführungsbeispiele der vorliegenden Offenbarung basierend auf der Erkenntnis, dass ein Schlüsselaustausch darüber abgesichert werden kann, dass ein von einer zentralen Stelle signiertes geteiltes Geheimnis auf einem neu zu initialisierendem Gerät abgelegt wird. Das geteilte Geheimnis kann anhand der Signatur geprüft werden, und anschließend durch das Gerät signiert und mit einem öffentlichen Schlüssel des zentralen Geräts verschlüsselt werden und der zentralen Stelle zugestellt werden. Dadurch kann gegenüber der zentralen Stelle nachgewiesen werden, dass es sich um das "richtige" Gerät handelt. Mit dem signierten und verschlüsselten geteilten Geheimnis kann nun einerseits eine Adresse eines elektronischen Postfachs des Geräts und andererseits ein öffentlicher Schlüssel des Geräts der zentralen Stelle übermittelt werden. Diese kann nun den öffentlichen Schlüssel des Geräts signieren und zum Abruf bereitstellen. Ferner kann die Adresse es elektronischen Postfachs anderen Kommunikationspartnern zugänglich gemacht werden. Somit wird ein in allen Belangen abgesicherter Schlüsselaustausch für neu initialisierte (Internet of Things, Internet der Dinge-) Geräte geschaffen.

Für solche Szenarien eignen sich in Weiterbildungen der Erfindung insbesondere Lösungen auf Basis verteilter Netzwerke, wie insbesondere die Distributed Ledger Technologie (DLT, wörtlich "verteiltes Hauptbuch"), da sie durch die verteilte Datenlage die Manipulierbarkeit reduziert (bis praktisch unmöglich macht), die Transparenz für alle Teilnehmer erhöht und damit ohne vertrauenswürdige Intermediäre (sogenannter "Trust Authorities", "Vertrauensautoritäten") auskommt, was vorteilhaft ist, da solchen Trust Authorities nicht nur Vertrauen in Bezug ihre Integrität entgegengebracht werden muss, sondern auch Bezug darauf, dass sie ihre eigenen Informationstechnologischen Systeme so gut schützen, dass nicht Dritte Unheil anrichten können. Weiterbildungen der vorliegenden Erfindung ziehen also Vorteile aus der Nutzung der Distributed Ledger Technologie, das zugrundeliegende Konzept kann jedoch auch ohne Verwendung solcher Netzwerke einen Sicherheitsgewinn bringen.

Ausführungsbeispiele der vorliegenden Offenbarung schaffen ein (erstes) computer-implementiertes Verfahren zum Austausch von kryptographischen Schlüsselinformationen zwischen einem Gerät und einer zentralen Stelle. Das Verfahren wird durch das Gerät ausgeführt. Das Verfahren umfasst ein Erhalten eines kryptographischen Geheimnisses. Das kryptographische Geheimnis ist der zentralen Stelle bekannt. Das Gerät erhält das kryptographische Geheimnis von der zentralen Stelle. Das Verfahren umfasst ein Erhalten eines öffentlichen Schlüssels der zentralen Stelle, etwa aus einem elektronischen Postfach der zentralen Stelle. Das Verfahren umfasst ein Erzeugen eines kryptographischen Schlüsselpaars für das Gerät mit einem privaten Schlüssel des Geräts und einem öffentlichen Schlüssel des Geräts. Das Verfahren umfasst ferner ein Signieren des kryptographischen Geheimnisses mit dem privaten Schlüssel des Geräts. Das Verfahren umfasst ein Verschlüsseln des mit dem privaten Schlüssel des Geräts signierten kryptographischen Geheimnisses mit dem öffentlichen Schlüssel der zentralen Stelle. Das Verfahren umfasst ein Bereitstellen des verschlüsselten und signierten kryptographischen Geheimnisses, einer Adresse eines elektronischen Postfachs des Geräts und des öffentlichen Schlüssels des Geräts für die zentrale Stelle über ein elektronisches Postfach der zentralen Stelle. Das verschlüsselte und signierte kryptographische Geheimnis wird zu der zentralen Stelle übermittelt, um gegenüber der zentralen Stelle zu beweisen, dass das Gerät über das kryptographische Geheimnis verfügt. Hierdurch kann sich das Gerät in gesicherter Weise der zentralen Stelle bekannt machen.

Beispielsweise kann das Erhalten des öffentlichen Schlüssels der zentralen Stelle ein Erhalten einer Adresse des elektronischen Postfachs der zentralen Stelle und ein Abrufen des öffentlichen Schlüssels der zentralen Stelle aus dem elektronischen Postfach der zentralen Stelle umfassen. Hierdurch kann der jeweils aktuelle gültige öffentliche Schlüssel der zentralen Stelle erhalten werden.

Beispielsweise kann das elektronische Postfach der zentralen Stelle und das elektronische Postfach des Geräts über eine verteilte Datenbank zugänglich sein. Eine verteilte Datenbank kann eine größere Sicherheit bieten, da durch Redundanz ein Single Point of Failure (Einzelner Versagenspunkt) vermieden werden kann, der ausgenutzt werden könnte, um den Schlüsselaustausch zu vereiteln. Zudem sind Manipulationen gegebenenfalls nachvollziehbar.

Beispielsweise kann die verteilte Datenbank auf einer Distributed-Ledger-Technologie basieren. Entsprechend können Adressen des elektronischen Postfachs der zentralen Stelle und des elektronischen Postfachs des Geräts Adressen auf dem Distributed Ledger sein. Die Distributed Ledger-Technologie kombiniert die Redundanz von verteilten Datenbanken mit einem Schutz gegen Manipulation von einzelnen Knoten.

Beispielsweise kann die verteilte Datenbank auf einer Mehrzahl von Knoten basieren. Das Bereitstellen und/oder das Erhalten von Daten über ein elektronisches Postfach über die verteilte Datenbank kann auf einer zufälligen Auswahl von ein oder mehreren Knoten der Mehrzahl von Knoten für das Bereitstellen und/oder Erhalten der Informationen basieren. Durch die zufällige Auswahl kann verhindert werden, dass durch die Manipulation weniger, vorausgewählter Knoten eine Sabotage des Datenaustausches ermöglicht wird. Durch die Nutzung von mehreren Knoten kann die Redundanz erhöht werden, und damit ebenfalls die Zuverlässigkeit der Datenübertragung.

In einigen Ausführungsbeispielen ist das kryptographische Geheimnis durch einen privaten Schlüssel der zentralen Stelle signiert. Das Verfahren kann ferner ein Prüfen der Signatur des kryptographischen Geheimnisses basierend auf dem öffentlichen Schlüssel der zentralen Stelle umfassen. So kann die Authentizität der Signatur, und damit auch des kryptographischen Geheimnisses, überprüft werden.

Das Prüfen der Signatur und/oder das Erzeugen des kryptographischen Schlüsselpaars kann dabei zumindest teilweise in einer vertrauenswürdigen Ausführungsumgebung (auch engl. "Trusted Execution Environment") des Geräts durchgeführt werden. Hierdurch wird die Prüfung der Signatur und/oder die Generierung und/oder Aufbewahrung des Schlüsselpaars des Geräts zusätzlich abgesichert.

Beispielsweise kann das Prüfen der Signatur des kryptographischen Geheimnisses ein Prüfen der Signatur des kryptographischen Geheimnisses über eine Zertifikationsautorität (engl. "Certificate Authority", CA) umfassen. Das Einbeziehen einer CA kann die Manipulation des Schlüsselaustauschs weiter erschweren.

In einigen Ausführungsbeispielen umfasst das Verfahren ferner ein Erzeugen der Adresse des elektronischen Postfachs des Geräts basierend auf einem weiteren kryptographischen Geheimnis. In anderen Worten kann die Adresse des elektronischen Postfachs des Geräts von einem kryptographischen Geheimnis ableitbar sein.

Das Verfahren kann ferner ein Erhalten einer durch die zentrale Stelle signierten Version des öffentlichen Schlüssels des Geräts von der zentralen Stelle umfassen. Durch die Signatur der zentralen Stelle kann die Authentizität des öffentlichen Schlüssels des Geräts gegenüber Dritten bezeugt werden.

Beispielsweise kann das Verfahren ferner ein Bereitstellen der signierten Version des öffentlichen Schlüssels des Geräts über das elektronische Postfach des Geräts umfassen. Alternativ kann die zentrale Stelle selbst die signierte Version des öffentlichen Schlüssels des Geräts in dem elektronischen Postfach des Geräts ablegen. Aus dem elektronischen Postfach des Geräts kann der signierte öffentliche Schlüssel des Geräts von Dritten abgerufen werden.

In zumindest manchen Ausführungsbeispielen kann das Verfahren ferner ein Bereitstellen der Adresse des elektronischen Postfachs des Geräts zu ein oder mehreren weiteren elektronischen Postfächern von ein oder mehreren Kommunikationspartnern des Geräts umfassen. Dadurch kann das elektronische Postfach des Geräts den Kommunikationspartnern bekannt gemacht werden.

Beispielsweise kann das Verfahren ferner ein Erhalten von ein oder mehreren Nachrichten für das Gerät über das elektronische Postfach des Geräts, und entschlüsseln der ein oder mehreren Nachrichten mit dem privaten Schlüssel des Geräts umfassen. In anderen Worten kann das Verfahren ein verschlüsseltes Kommunizieren basierend auf dem Schlüsselpaar des Geräts umfassen.

Ausführungsbeispiele der vorliegenden Offenbarung schaffen ferner ein (zweites) computer-implementiertes Verfahren zum Austausch von kryptographischen Schlüsselinformationen zwischen einem Gerät und einer zentralen Stelle. Das Verfahren wird durch die zentrale Stelle ausgeführt. Das Verfahren umfasst ein Bereitstellen eines kryptographischen Geheimnisses für das Gerät. Das Verfahren umfasst ferner ein Bereitstellen eines öffentlichen Schlüssels der zentralen Stelle für das Gerät, etwa über ein elektronisches Postfach der zentralen Stelle. Das Verfahren umfasst ferner ein Erhalten einer mit dem öffentlichen Schlüssel der zentralen Stelle verschlüsselten und mit einem privaten Schlüssel des Geräts signierten Version des kryptographischen Geheimnisses, einer Adresse eines elektronischen Postfachs des Geräts, und eines öffentlichen Schlüssels des Geräts von dem Gerät. Das verschlüsselte und signierte kryptographische Geheimnis wird von dem Gerät zu der zentralen Stelle übermittelt, um gegenüber der zentralen Stelle zu beweisen, dass das Gerät über das kryptographische Geheimnis verfügt. Das Verfahren umfasst ferner ein Prüfen der erhaltenen Version des kryptographischen Geheimnisses basierend auf einem privaten Schlüssel der zentralen Stelle und basierend auf dem kryptographischen Geheimnis. Das Verfahren umfasst ferner verschlüsseltes Kommunizieren mit dem Gerät über das elektronische Postfach des Geräts basierend auf dem öffentlichen Schlüssel des Geräts. Durch das Übermitteln der signierten und verschlüsselten Version des kryptographischen Geheimnisses kann die Identität des Geräts gegenüber der zentralen Stelle nachgewiesen werden.

In manchen Ausführungsbeispielen kann das Verfahren ferner ein Signieren des öffentlichen Schlüssels des Geräts mit dem privaten Schlüssel der zentralen Stelle, und Bereitstellen des signierten öffentlichen Schlüssels für das Gerät umfassen. Hierdurch wird der öffentliche Schlüssel des Geräts durch die zentrale Stelle bestätigt.

Ausführungsbeispiele der vorliegenden Offenbarung schaffen ferner ein Programm mit einem Programmcode zum Durchführen zumindest eines der Verfahren, wenn der Programmcode auf einem Computer, einem Prozessor, einem Kontrollmodul oder einer programmierbaren Hardwarekomponente ausgeführt wird.

Ausführungsbeispiele der vorliegenden Offenbarung schaffen ferner eine computerimplementierte Vorrichtung zum Austausch von kryptographischen Schlüsselinformationen zwischen einem Gerät und einer zentralen Stelle. Die Vorrichtung ist für den Austausch der kryptographischen Schlüsselinformation von Seiten des Geräts geeignet. Die Vorrichtung umfasst eine Schnittstelle zur Kommunikation mit der zentralen Stelle. Das Verfahren umfasst ferner ein oder mehrere Prozessoren ausgebildet zum Ausführen des ersten Verfahrens. Ausführungsbeispiele schaffen ferner das Gerät mit der Vorrichtung.

Ausführungsbeispiele der vorliegenden Offenbarung schaffen ferner eine computerimplementierte Vorrichtung zum Austausch von kryptographischen Schlüsselinformationen zwischen einem Gerät und einer zentralen Stelle. Die Vorrichtung ist für den Austausch der kryptographischen Schlüsselinformation von Seiten der zentralen Stelle geeignet. Die Vorrichtung umfasst eine Schnittstelle zur Kommunikation mit dem Gerät. Die Vorrichtung umfasst ferner ein oder mehrere Prozessoren ausgebildet zum Ausführen des zweiten Verfahrens. Ausführungsbeispiele schaffen ferner die zentrale Stelle mit der Vorrichtung.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1a: zeigt ein Flussdiagramm eines Ausführungsbeispiels eines Verfahrens zum Austausch von kryptographischen Schlüsselinformationen zwischen einem Gerät und einer zentralen Stelle von Seiten des Geräts;
- Fig. 1b: zeigt ein Blockdiagramm eines Ausführungsbeispiels einer Vorrichtung zum Austausch von kryptographischen Schlüsselinformationen zwischen einem Gerät und einer zentralen Stelle von Seiten des Geräts;
- Fig.: 2a zeigt ein Flussdiagramm eines Ausführungsbeispiels eines Verfahrens zum Austausch von kryptographischen Schlüsselinformationen zwischen einem Gerät und einer zentralen Stelle von Seiten der zentralen Stelle;
- Fig. 2b: zeigt ein Blockdiagramm eines Ausführungsbeispiels einer Vorrichtung zum Austausch von kryptographischen Schlüsselinformationen zwischen einem Gerät und einer zentralen Stelle von Seiten der zentralen Stelle;
- Fig. 3a: zeigt ein Flussdiagramm eines Ausführungsbeispiels eines Verfahrens zum verschlüsselten Bereitstellen von Daten einer Datenquelle für eine Mehrzahl von Geräten;
- Fig. 3b: zeigt ein Blockdiagramm eines Ausführungsbeispiels einer Vorrichtung zum verschlüsselten Bereitstellen von Daten einer Datenquelle für eine Mehrzahl von Geräten;
- Fig. 4: zeigt eine schematische Übersicht von Schlüsseln und Briefkasten-Adressen im Distributed Ledger;
- Fig. 5: zeigt ein schematisches Diagramm einer Ausstattung eines Fahrzeugs mit einem kryptografischen Geheimnis;
- Fig. 6: zeigt ein schematisches Diagramm einer Prüfung einer Signatur des kryptografischen Geheimnisses;
- Fig. 7: zeigt ein schematisches Diagramm einer Erzeugung einer Adresse eines elektronischen Postfachs;
- Fig. 8: zeigt ein schematisches Diagramm einer Erzeugung eines Schlüsselpaars durch das Fahrzeug;
- Fig. 9: zeigt ein schematisches Diagramm eines Austausches von Informationen zwischen dem Fahrzeug und der zentralen Stelle; und
- Fig. 10: zeigt ein schematisches Diagramm einer Authentifizierung der Informationen des Fahrzeugs durch die zentrale Stelle.

Verschiedene Ausführungsbeispiele werden nun ausführlicher unter Bezugnahme auf die beiliegenden Zeichnungen beschrieben, in denen einige Ausführungsbeispiele dargestellt sind.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

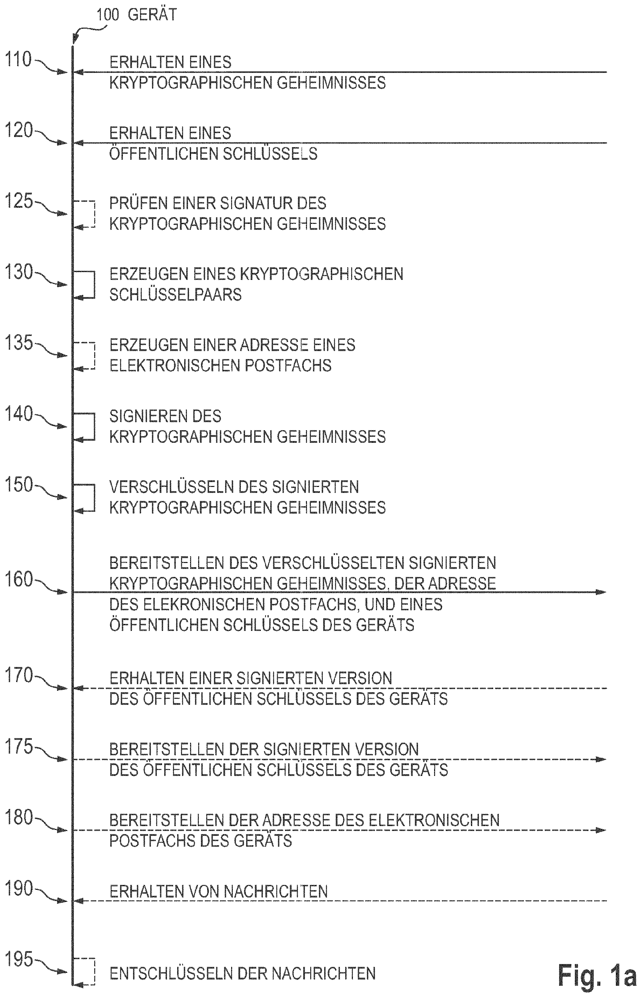

Fig. 1a zeigt ein Flussdiagramm eines Ausführungsbeispiels eines (computer-implementierten) Verfahrens zum Austausch von kryptographischen Schlüsselinformationen zwischen einem Gerät 100 und einer zentralen Stelle 200 von Seiten des Geräts. In anderen Worten wird das Verfahren durch das Gerät, etwa durch einen Prozessor des Geräts, ausgeführt. Das Verfahren umfasst ein Erhalten 110 eines kryptographischen Geheimnisses, wobei das kryptographische Geheimnis der zentralen Stelle bekannt ist. Das Verfahren umfasst ein Erhalten 120 eines öffentlichen Schlüssels der zentralen Stelle. Das Verfahren umfasst ein Erzeugen 130 eines kryptographischen Schlüsselpaars für das Gerät mit einem privaten Schlüssel des Geräts und einem öffentlichen Schlüssel des Geräts. Das Verfahren umfasst ein Signieren 140 des kryptographischen Geheimnisses mit dem privaten Schlüssel des Geräts. Das Verfahren umfasst ein Verschlüsseln 150 des mit dem privaten Schlüssel des Geräts signierten kryptographischen Geheimnisses mit dem öffentlichen Schlüssel der zentralen Stelle. Das Verfahren umfasst ferner ein Bereitstellen 160 des verschlüsselten und signierten kryptographischen Geheimnisses, einer Adresse eines elektronischen Postfachs des Geräts und des öffentlichen Schlüssels des Geräts für die zentrale Stelle über ein elektronisches Postfach der zentralen Stelle.

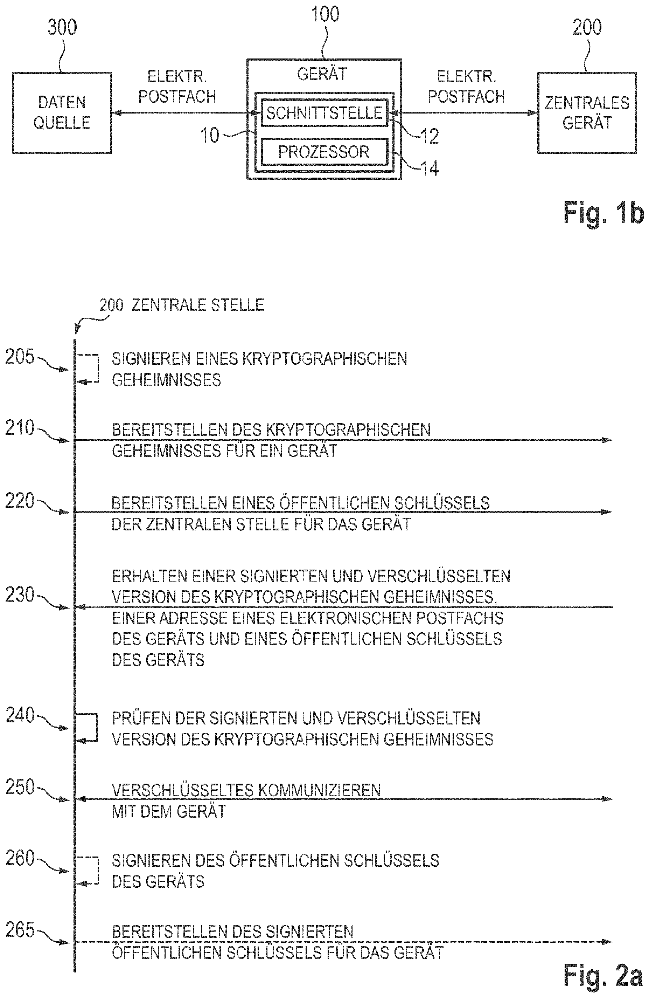

Fig. 1b zeigt ein Blockdiagramm eines Ausführungsbeispiels einer Vorrichtung 10 zum Austausch von kryptographischen Schlüsselinformationen zwischen einem Gerät und einer zentralen Stelle von Seiten des Geräts. Die Vorrichtung umfasst eine Schnittstelle 12 zur Kommunikation mit der zentralen Stelle (etwa über eine verteilte Datenbank). Die Vorrichtung umfasst ferner ein oder mehrere Prozessoren 14, die mit der Schnittstelle gekoppelt sind. Im Allgemeinen wird die Funktionalität der Vorrichtung durch die ein oder mehreren Prozessoren bereitgestellt, etwa mit Hilfe der Schnittstelle. Beispielsweise können die ein oder mehreren Prozessoren ausgebildet sein, um interne Berechnungen der Vorrichtung durchzuführen und die Kommunikation mit der zentralen Stelle oder weiteren Kommunikationspartnern zu koordinieren. Die Schnittstelle kann genutzt werden, um die Kommunikation durchzuführen. Die ein oder mehreren Prozessoren sind ausgebildet zum Ausführen des Verfahrens von Fig. 1a, etwa im Zusammenspiel mit der Schnittstelle. Folglich wird die Vorrichtung, und insbesondere die ein oder mehreren Prozessoren der Vorrichtungen, durch die Merkmale des Verfahrens fortgebildet. Fig. 1b zeigt ferner das Gerät 100 mit der Vorrichtung 10.

Einige Ausführungsbeispiele der vorliegenden Offenbarung beziehen sich auf ein computer-implementiertes Verfahren, eine computer-implementierte Vorrichtung und/oder ein Computerprogramm zum Austausch von kryptographischen Schlüsselinformationen zwischen dem Gerät 100 und der zentralen Stelle 200 von Seiten des Geräts 100. Grundsätzlich kann das Gerät beispielsweise ein Gerät des Internet der Dinge sein, auch engl. ein loT-Device oder loT-Gerät. Dazu zählen im Allgemeinen Geräte die (selbstständig) mit anderen Geräten kommunizieren, d.h. ein Gerät des Internet der Dinge kann als Gerät charakterisiert werden, dass es "vernetzt" ist, also zur Kommunikation mit ein oder mehreren anderen Geräten ausgebildet ist. Im Folgenden wird das Gerät insbesondere als Fahrzeug beschrieben, das heißt das Gerät 100 kann ein Fahrzeug sein, etwa ein Kraftfahrzeug. Dasselbe Konzept kann jedoch auch auf Komponenten des Fahrzeugs, etwa Steuergeräte, angewandt werden. In anderen Worten kann das Gerät beispielsweise ein Steuergerät für ein Fahrzeug sein. Das Gerät steht in Kommunikation mit der zentralen Stelle. Dabei kann die zentrale Stelle beispielsweise ein zentraler Server sein, also ein Server der zur Kommunikation mit einer Mehrzahl von Geräten ausgebildet ist. Beispielsweise kann die zentrale Stelle ein Server eines Herstellers oder Betreibers/Abnehmers des Geräts sein, etwa eines Fahrzeugherstellers oder eines Betreibers einer Fahrzeugflotte.

Grundsätzlich wird das vorliegende Verfahren genutzt, um eine sichere verschlüsselte Kommunikation zwischen dem Gerät und einer Gegenstelle zu ermöglichen, etwa zwischen dem Gerät und weiteren Geräten (die als Datenquelle für das Gerät fungieren können) oder zwischen dem Gerät und der zentralen Stelle. Dabei kann das Gerät ebenfalls als Datenquelle für andere Geräte gesehen werden, und andere Geräte können als Datenquelle für das Gerät fungieren. Daher kann auch eine Datenquelle, wie sie in der vorliegenden Offenbarung referenziert wird, das Gerät sein und entsprechend das Verfahren von Fig. 1a ausführen. Dabei wird das verschlüsselte, signierte kryptographische Geheimnis zu der zentralen Stelle übermittelt, um gegenüber der zentralen Stelle zu beweisen, dass das Gerät über das kryptographische Geheimnis verfügt. Weiterhin wird der öffentliche Schlüssel des Geräts zu der zentralen Stelle übermittelt, um den öffentlichen Schlüssels des Geräts a) von der zentralen Stelle signieren zu lassen und b) so dass die zentrale Stelle den öffentlichen Schlüssel nutzen kann, um Nachrichten an das Gerät zu verschlüsseln.

Grundsätzlich basiert die Schlüsselaustausch auf zwei Komponenten - dem Schlüsselpaar des Geräts und dem kryptographischen Geheimnis.

Das Verfahren umfasst folglich das Erhalten 110 des kryptographischen Geheimnisses. Das kryptographische Geheimnis ist der zentralen Stelle bekannt. Folglich wird das kryptographische Geheimnis von der zentralen Stelle erhalten, oder zumindest von einem Intermediär, der das kryptographische Geheimnis der zentralen Stelle ebenfalls bereitstellt. Im Allgemeinen kann das kryptographische Geheimnis aus einem Speicher des Geräts ausgelesen werden, etwa aus einem gesicherten Speicher des Geräts. Beispielsweise kann das kryptographische Geheimnis in einer sog. Firmware (einer Hardware-Programmierung) des Geräts enthalten sein. Das Erhalten des kryptographischen Geheimnisses kann ein Auslesen des kryptographischen Geheimnisses aus dem (gesicherten) Speicher/der Firmware umfassen. Beispielsweise kann das kryptographische Geheimnis in einer gesicherten Ausführungsumgebung (auch engl. Trusted Execution Environment) des Geräts/der Vorrichtung gespeichert sein und von dort ausgelesen werden.

Das Verfahren umfasst ferner das Erhalten 120 des öffentlichen Schlüssels der zentralen Stelle, etwa durch Abrufen aus einem elektronischen Postfach der zentralen Stelle, oder auch durch Auslesen des öffentlichen Schlüssels der zentralen Stelle aus in einem (gesicherten) Speicher/Firmware des Geräts. Beispielsweise kann das Erhalten 120 des öffentlichen Schlüssels der zentralen Stelle ein Erhalten einer Adresse des elektronischen Postfachs der zentralen Stelle und ein Abrufen des öffentlichen Schlüssels der zentralen Stelle aus dem elektronischen Postfach der zentralen Stelle umfassen. Beispielsweise kann die Adresse des elektronischen Postfaches in dem (gesicherten) Speicher/Firmware des Geräts gespeichert sein, etwa in der gesicherten Ausführungsumgebung. In einer weiteren Implementierung kann das Erhalten des öffentlichen Schlüssels der zentralen Stelle ein Abrufen des öffentlichen Schlüssels der zentralen Stelle von einem öffentlichen Schlüssel-Server umfassen.

Der öffentliche Schlüssel der zentralen Stelle kann beispielsweise für folgende Operationen verwendet werden - um Nachrichten für die zentrale Stelle zu verschlüsseln, und um das kryptographische Geheimnis auf Authentizität zu prüfen. Beispielsweise kann das kryptographische Geheimnis durch einen privaten Schlüssel der zentralen Stelle signiert sein. In anderen Worten kann das kryptographische Geheimnis durch die zentrale Stelle signiert sein. Die Signatur der zentralen Stelle kann über den öffentlichen Schlüssel der zentralen Stelle überprüfbar sein. Beispielsweise kann das das Verfahren ferner ein Prüfen 125 der Signatur des kryptographischen Geheimnisses basierend auf dem öffentlichen Schlüssel der zentralen Stelle umfassen. Zusätzlich oder alternativ kann die Signatur des kryptographischen Geheimnisses mit Hilfe einer Zertifikationsautorität (auch engl. Certificate Authority, CA) überprüft werden. Dazu kann der (gesicherte) Speicher/Firmware des Geräts eine Datenstruktur mit Adressen mit vertrauenswürdigen CAs umfassen, die kontaktiert werden können, um die Signatur des kryptographischen Geheimnisses zu prüfen. Das Prüfen der Signatur des kryptographischen Geheimnisses kann ein Prüfen der Signatur des kryptographischen Geheimnisses über eine Zertifikationsautorität umfassen, etwa durch Übermitteln der Signatur an die Zertifikationsautorität und Empfangen eines Ergebnisses der Überprüfung von der Zertifikationsautorität. Dabei kann die Kommunikation mit der Zertifikationsautorität ebenfalls über die Schnittstelle 12 erfolgen.

Das Verfahren umfasst ferner das Erzeugen 130 des kryptographischen Schlüsselpaars für das Gerät. Dabei umfasst das kryptographische Schlüsselpaar den privaten Schlüssel des Geräts und den öffentlichen Schlüssel des Geräts. Das kryptographische Schlüsselpaar ist beispielsweise ein Schlüsselpaar zur Anwendung in der asymmetrischen Kryptographie. Dabei ist der private Schlüssel vorzugsweise nur dem Gerät bekannt (etwa in der vertrauenswürdigen Ausführungsumgebung gespeichert), und der öffentliche Schlüssel kann von anderen Geräten/der zentralen Stelle verwendet werden, um Nachrichten für das Gerät zu verschlüsseln und/oder um eine Signatur des Geräts zu überprüfen. Der öffentliche Schlüssel des Geräts kann dabei (in einer durch die zentrale Stelle signierten Version) über ein elektronisches Postfach des Geräts bereitgestellt werden.

Ist das kryptographische Schlüsselpaar des Geräts generiert, und, optional, die Signatur der zentralen Stelle des kryptographischen Geheimnisses verifiziert, so kann das kryptographische Geheimnis zu der zentralen Stelle übermittelt werden. Um gegenüber der zentralen Stelle später zeigen zu können, dass der ebenfalls übermittelte öffentliche Schlüssel des Geräts ebenfalls authentisch ist, wird das kryptographische Geheimnis ebenfalls durch das Gerät signiert, mit dem privaten Schlüssel des Geräts. Von Seiten der zentralen Stelle kann diese Signatur mit dem öffentlichen Schlüssel des Geräts verifiziert werden, wodurch gleichzeitig die Authentizität des öffentlichen Schlüssels des Geräts bewiesen werden kann. Folglich umfasst das Verfahren das Signieren 140 des kryptographischen Geheimnisses mit dem privaten Schlüssel des Geräts. In der asymmetrischen Kryptographie wird der private Schlüssel genutzt, um Nachrichten zu signieren, und um basierend auf dem öffentlichen Schlüssel verschlüsselte Nachrichten zu entschlüsseln. Der öffentliche Schlüssel wird genutzt, um die Signatur zu überprüfen und um Nachrichten für das jeweilige Gerät zu verschlüsseln. Im Allgemeinen ist eine Signatur ein Wert, der einerseits auf den zu signierenden Daten basiert, und andererseits auf dem privaten Schlüssel. Dabei ist die Signatur ein Ergebnis einer kryptographischen Rechenoperation über die zu signierenden Daten (oder über einen Hash-Wert (Zerwürflungswert) der zu signierenden Daten), wobei die kryptographische Rechenoperation auf dem privaten Schlüssel basiert. Dabei kann die Signatur einerseits mit Hilfe des öffentlichen Schlüssels überprüft werden (über eine weitere kryptographische Rechenoperation auf Basis des öffentlichen Schlüssels). Gleichzeitig kann die Integrität der signierten Nachricht überprüft werden, da die Signatur zu den signierten Daten passen muss. Durch die Signatur bleiben die zu signierenden Daten im Allgemeinen unangetastet, die Signatur wird meist lediglich hinzugefügt.

Das Verfahren umfasst ferner das Verschlüsseln 150 des mit dem privaten Schlüssel des Geräts signierten kryptographischen Geheimnisses mit dem öffentlichen Schlüssel der zentralen Stelle, etwa um ein Abfangen oder eine Manipulation der mit dem privaten Schlüssel des Geräts signierten kryptographischen Geheimnisses durch einen Intermediär zu unterbinden. Durch die Verschlüsselung werden die zu verschlüsselnden Daten, hier das mit dem privaten Schlüssel des Geräts signierte kryptographische Geheimnis, durch eine kryptographische Rechenoperation in ein Format konvertiert, basierend auf dem öffentlichen Schlüssel des Empfängers, so dass die verschlüsselten Daten nur mit dem entsprechenden privaten Schlüssel zurückkonvertiert werden können.

Das Verfahren umfasst ferner das Bereitstellen (etwa Übermitteln) 160 des verschlüsselten und signierten kryptographischen Geheimnisses, der Adresse des elektronischen Postfachs des Geräts und des öffentlichen Schlüssels des Geräts für die zentrale Stelle über das elektronische Postfach der zentralen Stelle. In anderen Worten werden die genannten Daten in das elektronische Postfach der zentralen Stelle der zentralen Stelle übermittelt. Dabei kann ein Teil der Daten per Verweis bereitgestellt werden. Beispielsweise kann der öffentliche Schlüssel des Geräts in dem elektronischen Postfach des Geräts gespeichert werden, und die Adresse des elektronischen Postfachs des Geräts kann als Verweis in das elektronische Postfach der zentralen Stelle übermittelt werden, ohne den eigentlichen öffentlichen Schlüssel in das elektronische Postfach der zentralen Stelle zu übermitteln.

Um die elektronische Adresse des Geräts an das Postfach der zentralen Stelle übermitteln zu können, kann das Verfahren ferner ein Erzeugen 135 der Adresse des elektronischen Postfachs des Geräts basierend auf einem weiteren kryptographischen Geheimnis umfassen. Alternativ kann die Adresse des elektronischen Postfachs von einem anderen Gerät generiert sein, etwa von der zentralen Stelle (wodurch auch die Übermittlung der Adresse hinfällig wird) oder von einer Verwaltungsentität der dezentralen Datenbank.

In zumindest einigen Ausführungsbeispielen umfasst das Verfahren ferner ein Erhalten 170 einer durch die zentrale Stelle signierten Version des öffentlichen Schlüssels des Geräts von der zentralen Stelle. Dabei basiert die Signatur beispielsweise auf dem privaten Schlüssel der zentralen Stelle. Das Verfahren kann ferner ein Bereitstellen 175 der signierten Version des öffentlichen Schlüssels des Geräts über das elektronische Postfach des Geräts umfassen, etwa um den öffentlichen Schlüssel anderen Geräten für die Überprüfung von Signaturen und/oder zur signierten Kommunikation mit dem Gerät zur Verfügung zu stellen. Dazu kann die von der zentralen Stelle signierte Version des öffentlichen Schlüssels des Geräts beispielsweise in das elektronische Postfach des Geräts übermittelt werden. Anschließend (oder zuvor/zeitgleich) kann die Adresse des elektronischen Postfachs bekanntgemacht werden, so dass andere Geräte dem Gerät verschlüsselte Daten/Nachrichten schicken können. Das Verfahren kann ferner ein Bereitstellen (etwa ein Übermitteln) 180 der Adresse des elektronischen Postfachs des Geräts zu ein oder mehreren weiteren elektronischen Postfächern von ein oder mehreren Kommunikationspartnern des Geräts und/oder zu einem zentralen Register von Adressen von elektronischen Postfächern umfassen.

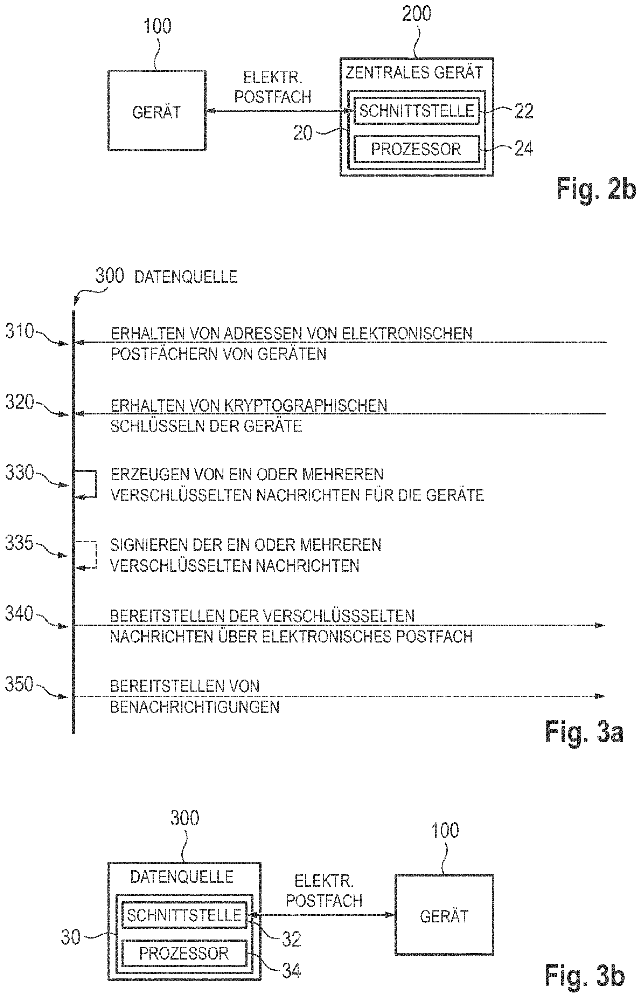

Basierend auf dem öffentlichen Schlüssel kann nun die zentrale Stelle und/oder ein oder mehrere weitere Geräte verschlüsselte Nachrichten an das Gerät schicken. Das Verfahren kann ferner ein Erhalten (etwa ein Empfangen/Abrufen) 190 von ein oder mehreren (mit dem öffentlichen Schlüssel des Geräts verschlüsselten) Nachrichten für das Gerät über das elektronische Postfach des Geräts umfassen. Das Verfahren kann ferner ein Entschlüsseln 195 der ein oder mehreren Nachrichten mit dem privaten Schlüssel des Geräts umfassen. Zur Kommunikation mit der zentralen Stelle kann das Gerät die entsprechenden Daten/Nachrichten mit den öffentlichen Schlüsseln der jeweiligen Geräte/der zentralen Stelle verschlüsseln. Auch kryptographische Schlüssel einer Gruppenkommunikation können zur verschlüsselten Kommunikation genutzt werden. Dies wird im Zusammenhang mit den Fign. 3a und/oder 3b weiter erläutert, ist aber genauso auch auf das Verfahren/die Vorrichtung der Fign. 1a und/oder 1b anwendbar.

Im Folgenden wird die Kommunikation beispielhaft für das Empfangen von Daten von einer Datenquelle erläutert. Beispielsweise kann das Verfahren ein Erhalten einer Nachricht von einer Datenquelle über ein elektronisches Postfach (das über die dezentrale Datenbank zugänglich sein kann). Die Nachricht kann Daten umfassen, die individuell für das Gerät von der Datenquelle verschlüsselt sind. Beispielsweise kann die Nachricht über ein elektronisches Postfach der Datenquelle oder über ein elektronisches Gruppenpostfach erhalten werden. In diesem Fall kann das Verfahren ferner ein Erhalten einer Benachrichtigung über die Nachricht über das elektronische Postfach des Geräts umfassen. Alternativ kann die Nachricht direkt über das elektronische Postfach des Geräts erhalten werden. Das Verfahren kann ferner ein Entschlüsseln der Daten basierend auf einem kryptographischen Schlüssel des Geräts umfassen. Dabei kommen, wie auch im Zusammenhang mit den Fign. 3a und/oder 3b beschrieben wird, verschiedene Typen von kryptographischen Schlüsseln in Betracht. Beispielsweise können die Daten basierend auf einem gerätespezifischen öffentlichen Schlüssel des Geräts verschlüsselt sein. In diesem Fall können die Daten basierend auf einem gerätespezifischen privaten Schlüssel des Geräts entschlüsselt werden. Alternativ oder zusätzlich können die Daten basierend auf einem kryptographischen Schlüssel für eine Gruppe verschlüsselt sein. In diesem Fall können die Daten basierend auf einem symmetrischen Schlüssel für die Gruppe oder basierend auf einem privaten Schlüssel für die Gruppe entschlüsselt werden.

Wie bereits zuvor angesprochen wurde, basiert die Kommunikation zwischen dem Gerät und der zentralen Stelle und/oder anderen Kommunikationspartnern (wie etwa anderen Geräten) auf sogenannten elektronischen Postfächern. Dabei können die elektronischen Postfächer beispielsweise außerhalb der jeweiligen Geräte/der zentralen Stelle vorgehalten werden, etwa durch einen verteilte (dezentrale) Datenbank oder durch eine zentralisierte Datenbank. Grundsätzlich können die Postfächer dabei öffentlich zugänglich sein, so dass beispielsweise jedes Gerät, das Zugriff auf die verteilte Datenbank hat, in das jeweilige Postfach schreiben kann und/oder das jeweilige Postfach auslesen kann. In anderen Worten können das elektronische Postfach der zentralen Stelle und das elektronische Postfach des Geräts über eine verteilte Datenbank, oder alternativ über eine zentralisierte Datenbank, zugänglich sein. Dabei ist die verteile Datenbank dadurch charakterisiert, dass sie nicht unter Kontrolle einer einzigen Entität ist, sondern verteilt durch eine Mehrzahl von (Rechen-) Knoten angeboten wird. In anderen Worten kann die verteilte Datenbank auf einer Mehrzahl von Knoten basieren. Daten der verteilten Datenbank werden zwischen den Rechenknoten der Mehrzahl von Knoten repliziert. Dabei können Daten der verteilten Datenbank durch die Knoten hinzugefügt werden, und werden dann auf die anderen Knoten repliziert. Eine mögliche Implementierung einer solchen verteilten Datenbank basiert auf der Distributed Ledger-Technologie. In anderen Worten kann die verteilte Datenbank auf einer Distributed-Ledger-Technologie basieren. Dafür sind verschiedene Distributed Ledger-Technologien denkbar, wie etwa Blockchain oder ein gerichteter azyklischer Graph. Adressen des elektronischen Postfachs der zentralen Stelle und des elektronischen Postfachs des Geräts können folglich Adressen auf dem Distributed Ledger sein.

Dabei können die angesprochenen elektronischen Postfächer beispielsweise Datenspeicher sein, die von der verteilten Datenbank oder der zentralisierten Datenbank bereitgestellt werden. Diese Datenspeicher können von den beteiligten Prozesspartnern, also etwa dem Gerät und der zentralen Stelle, aber auch anderen Geräten mit Zugriff auf die verteilte oder zentralisierte Datenbank angesprochen werden, beispielsweise mit der Möglichkeit, aus dem Datenspeicher Daten auszulesen und in den Datenspeicher Daten zu speichern. Um einer anderen Entität eine Nachricht / Daten zu schicken, kann diese Nachricht/Daten entweder in dem Datenspeicher gespeichert werden, der dem elektronischen Postfach der anderen Entität entspricht, oder die Nachricht/Daten kann in einem Datenspeicher gespeichert werden, die einem elektronischen Postfach der versendenden Entität entspricht, und zusätzlich kann eine Benachrichtigung in dem Datenspeicher gespeichert werden, der dem elektronischen Postfach der anderen Entität entspricht. Dabei sind die elektronischen Postfächer außerhalb der jeweiligen Geräte angeordnet, in der verteilten oder zentralisierten Datenbank. Im Kontext mit der Distributed Ledger-Technologie ist ein elektronisches Postfach dabei ein Datenspeicher, der über eine Adresse auf dem Distributed Ledger zugänglich ist, und auf dem über den Distributed Ledger Daten gespeichert werden können.

Folglich werden die Daten, die über die Postfächer ausgetauscht werden, in dem Distributed Ledger gespeichert werden. Dabei können, um die Verlässlichkeit zu erhöhen, zwei Ansätze gewählt werden. Einerseits können die jeweiligen Daten jeweils auf mehreren Knoten in die verteilte Datenbank eingefügt werden. Andererseits können die Knoten basierend auf einem Zufallsverfahren ausgewählt werden. In anderen Worten kann das Bereitstellen und/oder das Erhalten von Daten über ein elektronisches Postfach über die verteilte Datenbank auf einer zufälligen Auswahl von ein oder mehreren Knoten der Mehrzahl von Knoten für das Bereitstellen und/oder Erhalten der Informationen basieren. In anderen Worten kann das Gerät zum Bereitstellen/Übermitteln von Daten über ein Postfach die entsprechenden Daten an (eine zufällige Auswahl von) mehrere/mehrere Knoten der verteilten Datenbank übermitteln. Das Gerät kann zum Abrufen/Empfangen von Daten aus einem Postfach die entsprechenden Daten aus (einer zufälligen von) mehreren Knoten der verteilten Datenbank empfangen/abrufen, und anschließend die Daten der verschiedenen Knoten vergleichen, um nicht manipulierte Daten zu erhalten.

Im Allgemeinen können besonders sicherheitsbedürftige Operationen in der vertrauenswürdigen Ausführungsumgebung des Geräts ausgeführt werden. Beispielsweise kann das Prüfen der Signatur des kryptographischen Geheimnisses und/oder das Erzeugen des kryptographischen Schlüsselpaars zumindest teilweise in einer vertrauenswürdigen Ausführungsumgebung des Geräts durchgeführt werden. Beispielsweise kann die vertrauenswürdige Ausführungsumgebung durch einen Prozessor oder einen System-auf-einem-Chip (System-on-Chip, SoC) des Geräts bereitgestellt werden, etwa von einem Prozessor/SoC 14 der Vorrichtung 10. Doch auch andere kryptographische Operationen können in der vertrauenswürdigen Ausführungsumgebung ausgeführt werden, wie etwa das Signieren und/oder das Verschlüsseln des kryptographischen Geheimnisses.

Die Schnittstelle 12 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Beispielsweise kann die Schnittstelle 12 ausgebildet sein, um über die verteilte Datenbank zu kommunizieren. Dabei kann auf die verteilte Datenbank etwa über ein Computernetzwerk, etwa über ein öffentliches Computernetzwerk wie das Internet, oder über ein nicht-öffentliches Computernetzwerk zugegriffen werden. Entsprechend kann die Schnittstelle 12 ausgebildet sein, um über ein Computernetzwerk auf die verteilte Datenbank zuzugreifen. Der Zugriff auf die verteilte Datenbank kann durch Übermitteln und Empfangen von digitalen Datenpaketen durchgeführt werden, etwa durch die Nutzung von bereitgestellten Schnittstellen durch Rechenknoten, von denen die verteilte Datenbank bereitgestellt wird.

In Ausführungsbeispielen können die ein oder mehreren Prozessoren einem beliebigen Controller oder Prozessor oder einer programmierbaren Hardwarekomponente entsprechen. Beispielsweise kann die Funktionalität der ein oder mehreren Prozessoren auch als Software realisiert sein, die für eine entsprechende Hardwarekomponente programmiert ist. Insofern können die ein oder mehreren Prozessoren als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung der ein oder mehreren Prozessoren 14 denkbar.

Mehr Details und Aspekte des Verfahrens und der Vorrichtung von Fign. 1a und/oder 1b werden in Verbindung mit dem Konzept oder Beispielen genannt, die vorher oder nachher (z.B. Fig. 2a bis 10) beschrieben werden. Das Verfahren und die Vorrichtung der Fign. 1a und/oder 1b können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 2a zeigt ein Flussdiagramm eines Ausführungsbeispiels eines Verfahrens zum Austausch von kryptographischen Schlüsselinformationen zwischen einem Gerät 100 und einer zentralen Stelle 200 von Seiten der zentralen Stelle 200. In anderen Worten wird das Verfahren von Fig. 2a durch die zentrale Stelle durchgeführt. Das Verfahren umfasst ein Bereitstellen 210 eines kryptographischen Geheimnisses für das Gerät. Das Verfahren umfasst ein Bereitstellen 220 eines öffentlichen Schlüssels der zentralen Stelle für das Gerät. Das Verfahren umfasst ein Erhalten 230 einer mit dem öffentlichen Schlüssel der zentralen Stelle verschlüsselten und mit einem privaten Schlüssel des Geräts signierten Version des kryptographischen Geheimnisses, einer Adresse eines elektronischen Postfachs des Geräts, und eines öffentlichen Schlüssels des Geräts von dem Gerät. Das Verfahren umfasst ein Prüfen 240 der erhaltenen Version des kryptographischen Geheimnisses basierend auf einem privaten Schlüssel der zentralen Stelle und basierend auf dem kryptographischen Geheimnis. Das Verfahren umfasst ein verschlüsseltes Kommunizieren 250 mit dem Gerät über das elektronische Postfach des Geräts basierend auf dem öffentlichen Schlüssel des Geräts.

Fig. 2b zeigt ein Blockdiagramm eines Ausführungsbeispiels einer entsprechenden (computer-implementierten) Vorrichtung 20 zum Austausch von kryptographischen Schlüsselinformationen zwischen einem Gerät und einer zentralen Stelle von Seiten der zentralen Stelle. In anderen Worten ist die Vorrichtung 20 für den Austausch der kryptographischen Schlüsselinformation von Seiten der zentralen Stelle geeignet. Die Vorrichtung umfasst eine Schnittstelle 22 zur Kommunikation mit dem Gerät und/oder mit ein oder mehreren weiteren Geräten, etwa über die verteilte Datenbank. Die Vorrichtung umfasst ferner ein oder mehrere Prozessoren 24, die mit der Schnittstelle gekoppelt sind. Im Allgemeinen wird die Funktionalität der Vorrichtung durch die ein oder mehreren Prozessoren bereitgestellt, etwa mit Hilfe der Schnittstelle. Beispielsweise können die ein oder mehreren Prozessoren ausgebildet sein, um interne Berechnungen der Vorrichtung durchzuführen und die Kommunikation mit dem Gerät oder weiteren Kommunikationspartnern zu koordinieren. Die Schnittstelle kann genutzt werden, um die Kommunikation durchzuführen. Die ein oder mehreren Prozessoren sind ausgebildet zum Ausführen des Verfahrens von Fig. 2a, etwa im Zusammenspiel mit der Schnittstelle. Folglich wird die Vorrichtung, und insbesondere die ein oder mehreren Prozessoren der Vorrichtungen, durch die Merkmale des Verfahrens fortgebildet.

Während im Zusammenhang mit den Fign. 1 a bis 1b der Austausch von kryptographischen Schlüsselinformationen aus Sicht des Geräts beschrieben wurde, wird nun im Zusammenhang mit den Fign. 2a bis 2b die Perspektive der zentralen Stelle eingenommen. Dabei interagieren die zentrale Stelle und das Gerät, entweder zeitversetzt (durch Bereitstellung von Daten, die in der Firmware des Geräts aufgenommen werden), oder in zeit-verknüpfter Kommunikation, etwa zur Bereitstellung einer signierten Version des öffentlichen Schlüssels des Geräts.

Wie bereits zuvor ausgeführt worden ist kann die zentrale Stelle beispielsweise ein Gerät, beispielsweise ein Computer, eine Computerinstanz, ein Server, eine Serverinstanz oder eine Datenverarbeitungseinrichtung sein, die dazu ausgelegt ist, mit einer Mehrzahl von Geräten zu kommunizieren. In anderen Worten kann die zentrale Stelle beispielsweise für eine Mehrzahl von Geräten zuständig sein, und/oder mit einer Mehrzahl von Geräten über eine Datenkommunikation in Verbindung stehen. Beispielsweise kann die zentrale Stelle ein Server eines Herstellers oder Betreibers/Abnehmers des Geräts sein, etwa eines Fahrzeugherstellers oder eines Betreibers einer Fahrzeugflotte. In Ausführungsbeispielen kann dies beispielsweise über die verteilte Datenbank geschehen. Dabei kann die zentrale Stelle beispielsweise ausgebildet sein, um über ein Computernetzwerk, beispielsweise das Internet oder ein nicht-öffentliches Computernetzwerk auf die verteilte Datenbank zugreifen.

Das Verfahren umfasst das Bereitstellen 210 des kryptographischen Geheimnisses für das Gerät. Beispielsweise kann das Bereitstellen des kryptographischen Geheimnisses ein Generieren des kryptographischen Geheimnisses umfassen, beispielsweise basierend auf einer kryptographischen Zufallsfunktion. Zudem kann das Bereitstellen des kryptographischen Geheimnisses ein Signieren 205 des kryptographischen Geheimnisses basierend auf einem privaten Schlüssel der zentralen Stelle umfassen. Somit kann die zentrale Stelle, wie das Gerät, über ein kryptographisches Schlüsselpaar mit einem privaten Schlüssel und einem öffentlichen Schlüssel verfügen. Das kryptographische Geheimnis kann beispielsweise bei der Herstellung dem Gerät bereitgestellt werden. Beispielsweise kann das kryptographische Geheimnis in einer Firmware des Geräts enthalten sein, oder durch eine initiale Datenaufspielung auf einen Speicher des Geräts übertragen werden. Dazu kann die zentrale Stelle das (signierte) kryptographische Geheimnis in die Firmware oder in die Daten für die initiale Datenaufspielung integrieren.

Das Verfahren umfasst ferner das Bereitstellen 220 des öffentlichen Schlüssels der zentralen Stelle für das Gerät. Dabei kann der öffentliche Schlüssel der zentralen Stelle ebenfalls in die Firmware oder die Daten für die initiale Datenaufspielung integriert werden. Alternativ kann der öffentliche Schlüssel der zentralen Stelle über ein Postfach der zentralen Stelle bereitgestellt werden. Beispielsweise kann dem Gerät ferner, etwa über die Firmware oder die Daten für die initiale Datenaufspielung, die Adresse des Postfachs der zentralen Stelle bereitgestellt werden.

Das Verfahren umfasst ferner das Erhalten (etwa Empfangen) 230 der mit dem öffentlichen Schlüssel der zentralen Stelle verschlüsselten und mit einem privaten Schlüssel des Geräts signierten Version des kryptographischen Geheimnisses, der Adresse des elektronischen Postfachs des Geräts, und des öffentlichen Schlüssels des Geräts von dem Gerät. Dabei erfüllen die drei genannten Komponenten unterschiedliche Zwecke. Dabei können die genannten Daten der zentralen Stelle beispielsweise über das elektronische Postfach der zentralen Stelle erhalten werden. Dabei kann ein Teil der Daten per Verweis bereitgestellt werden. Beispielsweise kann der öffentliche Schlüssel des Geräts in dem elektronischen Postfach des Geräts gespeichert werden, und die Adresse des elektronischen Postfachs des Geräts kann als Verweis in das elektronische Postfach der zentralen Stelle übermittelt werden, ohne den eigentlichen öffentlichen Schlüssel in das elektronische Postfach der zentralen Stelle zu übermitteln.

Das kryptographische Geheimnis wird primär erhalten, damit verifiziert werden kann, dass es sich bei der Einrichtung, die die genannten Daten bereitstellt, auch um das Gerät handelt. Daher umfasst das Verfahren das Prüfen 240 der erhaltenen Version des kryptographischen Geheimnisses basierend auf dem privaten Schlüssel der zentralen Stelle und basierend auf dem kryptographischen Geheimnis. Dabei ist der zentralen Stelle das kryptographische Geheimnis bekannt, und kann daher mit dem kryptographischen Wert verglichen werden, der der zentralen Stelle von dem Gerät bereitgestellt wird.

Der öffentliche Schlüssel wiederum wird genutzt, um dem Gerät verschlüsselte Nachrichten zu schicken und die Authentizität von vom Gerät versendeten signierten Nachrichten zu überprüfen.. Entsprechend umfasst das Verfahren das verschlüsselte Kommunizieren 250 mit dem Gerät über das elektronische Postfach des Geräts basierend auf dem öffentlichen Schlüssel des Geräts. Dabei kann das elektronische Postfach des Geräts wiederum basierend auf der Adresse des Postfachs des Geräts angesprochen werden. Wie bereits im Zusammenhang mit den Fign. 1a und 1b beschrieben wurde können das elektronische Postfach der zentralen Stelle und das elektronische Postfach des Geräts über eine verteilte Datenbank, oder alternativ über eine zentralisierte Datenbank, zugänglich sein. Ferner kann die zentrale Stelle zum Bereitstellen/Übermitteln von Daten über ein Postfach die entsprechenden Daten an (eine zufällige Auswahl von) mehrere/mehrere Knoten der verteilten Datenbank übermitteln.

Damit auch andere Geräte dem Gerät vertrauen können kann der öffentliche Schlüssel des Geräts von der zentralen Stelle signiert werden. In anderen Worten kann das Verfahren ein Signieren 260 des öffentlichen Schlüssels des Geräts mit dem privaten Schlüssel der zentralen Stelle umfassen. Das Verfahren kann ferner ein Bereitstellen 265 des signierten öffentlichen Schlüssels für das Gerät, etwa über das elektronische Postfach des Geräts.

Die Schnittstelle 22 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Beispielsweise kann die Schnittstelle 22 ausgebildet sein, um über die verteilte Datenbank zu kommunizieren. Dabei kann auf die verteilte Datenbank etwa über ein Computernetzwerk, etwa über ein öffentliches Computernetzwerk wie das Internet, oder über ein nicht-öffentliches Computernetzwerk zugegriffen werden. Entsprechend kann die Schnittstelle 22 ausgebildet sein, um über ein Computernetzwerk auf die verteilte Datenbank zuzugreifen. Der Zugriff auf die verteilte Datenbank kann durch Übermitteln und Empfangen von digitalen Datenpaketen durchgeführt werden, etwa durch die Nutzung von bereitgestellten Schnittstellen durch Rechenknoten, von denen die verteilte Datenbank bereitgestellt wird.

In Ausführungsbeispielen können die ein oder mehreren Prozessoren 24 einem beliebigen Controller oder Prozessor oder einer programmierbaren Hardwarekomponente entsprechen. Beispielsweise kann die Funktionalität der ein oder mehreren Prozessoren auch als Software realisiert sein, die für eine entsprechende Hardwarekomponente programmiert ist. Insofern können die ein oder mehreren Prozessoren als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung der ein oder mehreren Prozessoren 24 denkbar.

Mehr Details und Aspekte des Verfahrens und der Vorrichtung von Fign. 2a und/oder 2b werden in Verbindung mit dem Konzept oder Beispielen genannt, die vorher oder nachher (z.B. Fig. 1a bis 1b, 3a bis 10) beschrieben werden. Das Verfahren und die Vorrichtung der Fign. 2a und/oder 2b können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 3a zeigt ein Flussdiagramm eines Ausführungsbeispiels eines computer-implementierten Verfahrens zum verschlüsselten Bereitstellen von Daten einer Datenquelle für eine Mehrzahl von Geräten. Das Verfahren umfasst ein Erhalten 310 von ein oder mehreren Adressen von ein oder mehreren elektronischen Postfächern der Mehrzahl von Geräten. Das Verfahren umfasst ein Erhalten 320 von kryptographischen Schlüsseln der Mehrzahl von Geräten. Das Verfahren umfasst ein Erzeugen 330 von ein oder mehreren Nachrichten für die Mehrzahl von Geräten basierend auf den Daten. Für die Geräte der Mehrzahl von Geräten werden individuell verschlüsselte Nachrichten basierend auf den kryptographischen Schlüsseln erzeugt. Das Verfahren umfasst ein Bereitstellen 340 der ein oder mehreren verschlüsselten Nachrichten über zumindest ein elektronisches Postfach basierend auf den ein oder mehreren Adressen der ein oder mehreren elektronischen Postfächer der Mehrzahl von Geräten.

Fig. 3b zeigt ein Blockdiagramm eines Ausführungsbeispiels einer entsprechenden computer-implementierten Vorrichtung 30 zum verschlüsselten Bereitstellen von Daten einer Datenquelle 300 für eine Mehrzahl von Geräten 100. Die Vorrichtung umfasst eine Schnittstelle 32 zur Kommunikation mit der Mehrzahl von Geräten. Das Verfahren umfasst ferner ein oder mehrere Prozessoren 34, die mit der Schnittstelle gekoppelt sind. Im Allgemeinen wird die Funktionalität der Vorrichtung durch die ein oder mehreren Prozessoren bereitgestellt, etwa mit Hilfe der Schnittstelle. Beispielsweise können die ein oder mehreren Prozessoren ausgebildet sein, um interne Berechnungen der Vorrichtung durchzuführen und die Kommunikation mit der Mehrzahl von Geräten zu koordinieren. Die Schnittstelle kann genutzt werden, um die Kommunikation durchzuführen. Die ein oder mehreren Prozessoren sind ausgebildet zum Ausführen des Verfahrens von Fig. 3a, etwa im Zusammenspiel mit der Schnittstelle. Folglich wird die Vorrichtung, und insbesondere die ein oder mehreren Prozessoren der Vorrichtungen, durch die Merkmale des Verfahrens fortgebildet. Fig. 3b zeigt ferner die Datenquelle 300 mit der Vorrichtung 30.

Verschiedene Ausführungsbeispiele der vorliegenden Erfindung beziehen sich auf ein computer-implementiertes Verfahren, eine computer-implementierte Vorrichtung sowie auf ein Computerprogramm zum Bereitstellen von Daten einer Datenquelle für eine Mehrzahl von Geräten aus Sicht der Datenquelle. Grundsätzlich können sowohl die Datenquelle als auch die ein oder mehreren Geräte beispielsweise Geräte des Internet der Dinge sein, auch engl. loT-Devices oder loT-Geräte. Dazu zählen im Allgemeinen Geräte die (selbstständig) mit anderen Geräten kommunizieren, d.h. ein Gerät des Internet der Dinge kann als Gerät charakterisiert werden, dass es "vernetzt" ist, also zur Kommunikation mit ein oder mehreren anderen Geräten ausgebildet ist. Im Folgenden wird insbesondere auf Fahrzeuge Bezug genommen. Somit kann die Datenquelle etwa ein Fahrzeug sein, oder ein oder mehrere der Mehrzahl von Geräten können Fahrzeuge sein. Insbesondere kann die Datenquelle auch eine Komponente eines Fahrzeugs sein, und die Mehrzahl von Geräten können ebenfalls (andere) Fahrzeugkomponenten sein, wie etwa Steuergeräte des Fahrzeugs. Die Datenquelle und die Mehrzahl von Geräten stehen in Kommunikation miteinander, beispielsweise über eine verteilte Datenbank. Dabei kann die verteilte Datenbank beispielsweise über ein Computernetzwerk zugänglich sein.

Das Verfahren umfasst das Erhalten 310 von ein oder mehreren Adressen von ein oder mehreren elektronischen Postfächern der Mehrzahl von Geräten. Grundsätzlich können die Mehrzahl von Geräten über zwei verschiedene Typen von elektronischen Postfächern ansprechbar sein. Einerseits kann jedes Gerät über ein eigenes elektronisches Postfach verfügen, also jedem Gerät ein gerätespezifisches elektronisches Postfach zugewiesen sein. Andererseits kann die Mehrzahl von Geräten auch über sogenannte elektronische Gruppen-Postfächer kommunizieren, also Postfächer, die von mehreren Geräten zum Empfangen von Nachrichten genutzt werden. Das jeweilige Gerät kann das Gruppen-Postfach entweder überwachen, um neu empfangene Nachrichten zu erhalten, oder das Gerät kann über sein gerätespezifisches elektronisches Postfach eine Benachrichtigung über den Empfang einer Nachricht in dem elektronischen Gruppen-Postfach erhalten. Eine weitere Möglichkeit ist es, dass Nachrichten in dem elektronischen Postfach der Datenquelle gespeichert werden, und das jeweilige Gerät eine Benachrichtigung über die Nachricht in seinem gerätespezifischen elektronischen Postfach erhält. Daher können die ein oder mehreren Adressen der ein oder mehreren elektronischen Postfächern Adressen der gerätespezifischen elektronischen Postfächer der Geräte und/oder Adressen von ein oder mehreren elektronischen Gruppen-Postfächern, die von der Mehrzahl von Geräten genutzt werden, umfassen.

Das Verfahren umfasst ferner das Erhalten 320 der kryptographischen Schlüssel der Mehrzahl von Geräten. Analog zu den Postfächern werden hier wiederum zwei Typen von kryptographischen Schlüsseln unterschieden. Beispielsweise können die kryptographischen Schlüssel ein oder mehrere gerätespezifische öffentliche Schlüssel der Mehrzahl von Geräten umfassen. Dies können beispielsweise die jeweiligen öffentlichen Schlüssel eines asymmetrischen Schlüsselpaars der Geräte sein. Beispielsweise können die kryptographischen Schlüssel für jedes Gerät der Mehrzahl von Geräten einen gerätespezifischen Schlüssel umfassen. Beispielsweise kann das das Erhalten der kryptographischen Schlüssel der Mehrzahl von Geräten ein Abrufen eines (gerätespezifischen) öffentlichen Schlüssels des jeweiligen Geräts aus dem elektronischen Postfach des Geräts umfassen. Alternativ oder zusätzlich können die kryptographischen Schlüssel ein oder mehrere kryptographische Schlüssel für eine Gruppe von Geräten umfassen, etwa einen kryptographischen Gruppenschlüssel. Dabei kann der kryptographische Gruppenschlüssel etwa ein öffentlicher Gruppenschlüssel eines asymmetrischen Schlüsselpaars für die jeweilige Gruppe sein, oder der kryptographische Gruppenschlüssel kann ein symmetrischer Gruppenschlüssel sein, der zwischen der Datenquelle und der Mehrzahl von Geräten verschlüsselt ausgetauscht wird (etwa basierend auf der asymmetrischen Verschlüsselung über die öffentlichen Schlüssel der Geräte und der Datenquelle).

Im Allgemeinen können die Adressen der Geräte und/oder die kryptographischen Schlüssel auf mehreren Wegen erhalten werden. Beispielsweise können die ein oder mehreren Adressen und/oder die kryptographischen Schlüssel aus einem Speicher der Datenquelle ausgelesen werden, etwa aus einer Firmware der Datenquelle oder aus einer vertrauenswürdigen Ausführungsumgebung (auch engl. Trusted Execution Environment) der Datenquelle. Alternativ oder zusätzlich können die ein oder mehreren Adressen und/oder die kryptographischen Schlüssel von einer vertrauenswürdigen zentralen Stelle abgerufen werden. Alternativ oder zusätzlich können die ein oder mehreren Adressen und/oder die kryptographischen Schlüssel von den jeweiligen Geräten bekanntgemacht werden, etwa durch Benachrichtigung der Datenquelle über das elektronische Postfach der Datenquelle.

Das Verfahren umfasst ferner das Erzeugen 330 der ein oder mehreren Nachrichten für die Mehrzahl von Geräten basierend auf den Daten. Für die Geräte der Mehrzahl von Geräten werden individuell verschlüsselte Nachrichten basierend auf den kryptographischen Schlüsseln (und basierend auf den Daten) erzeugt. Dabei können die Daten beispielsweise Daten sein, die von der Datenquelle generiert wurden. Beispielsweise kann die Datenquelle ein Sensor sein oder einen Sensor umfassen, etwa ein Sensor eines Fahrzeugs, und die Daten können Sensordaten des Sensors sein. Alternativ kann die Datenquelle ein Steuergerät eines Fahrzeugs sein, und die Daten können Statusinformationen des Steuergeräts sein. Die Daten werden individuell für die Mehrzahl von Geräten verschlüsselt.

Dabei bedeutet "individuell verschlüsselt" in manchen Ausführungsformen nicht zwangsläufig, dass für jedes Gerät die Daten separat verschlüsselt werden. Beispielsweise können die Daten über die ein oder mehreren Nachrichten so bereitgestellt werden, dass die Zugänglichkeit der Daten innerhalb der jeweiligen verschlüsselten Nachricht für die Mehrzahl von Geräten über die Verschlüsselung der Nachrichten gesteuert wird. In manchen Ausführungsbeispielen können die Daten für eine Gruppe von Fahrzeugen (also beispielsweise eine echte Teilmenge der Mehrzahl von Fahrzeugen) mit einem Gruppen-Schlüssel verschlüsselt werden, für andere Fahrzeuge können die Daten mit dem jeweiligen gerätespezifischen öffentlichen Schlüssel verschlüsselt werden. In manchen Ausführungsbeispielen jedoch werden die Daten für jedes Gerät der Mehrzahl von Geräten einzeln (etwa separat) individuell verschlüsselt. Zudem ergeben sich auch bei der Erzeugung der ein oder mehreren Nachrichten mehrere Möglichkeiten. In einer Variante kann für jedes Fahrzeug der Mehrzahl von Fahrzeugen eine eigene Nachricht erzeugt werden (die etwa basierend auf dem gerätespezifischen öffentlichen Schlüssel des Fahrzeugs verschlüsselt sein kann). Dabei kann der Inhalt der Nachricht vollständig basierend auf einem (einzigen) kryptographischen Schlüssel verschlüsselt sein. Ein solches Vorgehen kann man auch als "Verschlüsselung auf Datensatz-Ebene" bezeichnen, da der gesamte Datensatz (Inhalt) der Nachricht mit dem gleichen Schlüssel verschlüsselt wird. Dabei kann für jedes Gerät der Mehrzahl von Geräten eine individuell verschlüsselte Nachricht erzeugt werden. Die individuell verschlüsselte Nachricht kann diejenigen Daten umfassen, die für das jeweilige Gerät zugänglich sein sollen. Alternativ kann eine (einzige) Nachricht mehrere Komponenten umfassen, wobei die unterschiedlichen Komponenten unterschiedlich verschlüsselt sein können. In anderen Worten kann für die Mehrzahl von Geräten eine (einzige) Nachricht erzeugt werden. Die Daten können innerhalb der Nachricht individuell für die Mehrzahl von Geräten verschlüsselt sein. In anderen Worten können die Komponenten der Nachricht für unterschiedliche Geräte der Mehrzahl von Geräten bestimmt sein, und entsprechend auch unterschiedlich verschlüsselt.

In manchen Ausführungsbeispielen wird oder werden die ein oder mehreren Nachrichten von der Datenquelle ferner signiert, mit dem privaten Schlüssel der Datenquelle. Von den Geräten, denen die Nachrichten bereitgestellt werden, kann die Authentizität der Nachrichten dann basierend auf dem öffentlichen Schlüssel der Datenquelle überprüft werden. Entsprechend kann das Verfahren ein 335 Signieren der ein oder mehreren Nachrichten umfassen.

Das Verfahren umfasst ferner das Bereitstellen 340 der ein oder mehreren verschlüsselten Nachrichten über zumindest ein elektronisches Postfach basierend auf den ein oder mehreren Adressen der ein oder mehreren elektronischen Postfächer der Mehrzahl von Geräten. Hierbei sind, wie zuvor schon vorgestellt, mehrere Implementierungen möglich. Beispielsweise können die ein oder mehreren Nachrichten über ein elektronisches Postfach der Datenquelle oder über ein elektronisches Gruppenpostfach bereitgestellt werden. In diesen Fällen kann das Verfahren ferner ein Bereitstellen von Benachrichtigungen 350 über das Bereitstellen der ein oder mehreren Nachrichten für die Geräte über die elektronischen Postfächer der Geräte (basierend auf den Adressen der elektronischen Postfächer der Geräte). In anderen Worten kann die Datenquelle die Daten in einem allgemein zugänglichen Postfach (der Datenquelle oder der Gruppe) zur Verfügung stellen und die einzelnen Geräte darüber benachrichtigen. Die jeweiligen Geräte können die Nachrichten dann aus dem allgemein zugänglichen Postfach abholen. Alternativ können die ein oder mehreren Nachrichten (direkt) über die elektronischen Postfächer der Geräte zugestellt werden.

Wie bereits zuvor angesprochen wurde, basiert die Kommunikation zwischen der Datenquelle und der Mehrzahl von Geräten auf sogenannten elektronischen Postfächern. Dabei können die elektronischen Postfächer beispielsweise außerhalb der Datenquelle / der jeweiligen Geräte vorgehalten werden, etwa durch einen verteilte (dezentrale) Datenbank oder durch eine zentralisierte Datenbank. Grundsätzlich können die elektronischen Postfächer dabei öffentlich zugänglich sein, so dass beispielsweise jedes Gerät, das Zugriff auf die verteilte Datenbank hat in das jeweilige Postfach schreiben kann und/oder das jeweilige Postfach auslesen kann. In anderen Worten können das elektronische Postfach der Datenquelle und die ein oder mehreren elektronischen Postfächer der Mehrzahl von Geräten über eine verteilte Datenbank, oder alternativ über eine zentralisierte Datenbank, zugänglich sein. Dabei kann das Konzept der elektronischen Postfächer und verteilten Datenbanken zurückgegriffen werden, das im Zusammenhang mit den Fign. 1a bis 2b vorgestellt wurde.

Die Schnittstelle 32 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Beispielsweise kann die Schnittstelle 32 ausgebildet sein, um über die verteilte Datenbank zu kommunizieren. Dabei kann auf die verteilte Datenbank etwa über ein Computernetzwerk, etwa über ein öffentliches Computernetzwerk wie das Internet, oder über ein nicht-öffentliches Computernetzwerk zugegriffen werden. Entsprechend kann die Schnittstelle 32 ausgebildet sein, um über ein Computernetzwerk auf die verteilte Datenbank zuzugreifen. Der Zugriff auf die verteilte Datenbank kann durch Übermitteln und Empfangen von digitalen Datenpaketen durchgeführt werden, etwa durch die Nutzung von bereitgestellten Schnittstellen durch Rechenknoten, von denen die verteilte Datenbank bereitgestellt wird.

In Ausführungsbeispielen können die ein oder mehreren Prozessoren 34 einem beliebigen Controller oder Prozessor oder einer programmierbaren Hardwarekomponente entsprechen. Beispielsweise kann die Funktionalität der ein oder mehreren Prozessoren auch als Software realisiert sein, die für eine entsprechende Hardwarekomponente programmiert ist. Insofern können die ein oder mehreren Prozessoren als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung der ein oder mehreren Prozessoren 34 denkbar.

Mehr Details und Aspekte des Verfahrens und der Vorrichtung von Fign. 3a und/oder 3b werden in Verbindung mit dem Konzept oder Beispielen genannt, die vorher oder nachher (z.B. Fig. 1a bis 2b, 4 bis 10) beschrieben werden. Das Verfahren und die Vorrichtung der Fign. 3a und/oder 3b können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben werden.

Ausführungsbeispiele der vorliegenden Erfindung beziehen sich auf den sicheren Schlüsselaustausch für Kommunikationsverschlüsselung und Authentizitätsprüfungen mit loT-Geräten, beispielsweise über Distributed Ledger Netzwerke.

Die Funktionsweise der Erfindung wird anhand eines Beispiels aus dem Kontext "Lieferketten" beschrieben, ist aber für jedes Szenario sinnvoll und anwendbar, welches die obig beschriebenen Merkmale aufweist. Konkret geht es im vorliegenden Beispiel um den Outbound-Logistik-Prozess (Ausgangs-Logistik-Prozess), also dem Versand von fertig produzierten Fahrzeugen. An diesem Prozess nehmen zahlreiche Partner (wie Logistiker, Reedereien, Service-Anbieter, Banken, Versicherungen, etc.) und natürlich die frisch vom Band rollenden Fahrzeuge als Prozessinstanzen teil.

Ein Teilnehmer innerhalb dieses Prozessnetzwerkes möchte sicher sein können, dass die empfangenen Daten von dem betroffenen Fahrzeug selbst stammen und es sich tatsächlich um ein Fahrzeug des Prozesspartners (also des OEMs, Original Equipment Manufacturer, Erstausrüster) handelt. Genauso möchte auch der Hersteller/OEM sicher sein können, dass die empfangenen Daten tatsächlich von dem "eigenen" (bzgl. der Datenlieferungen autonom agierenden) Fahrzeug stammen und nicht ein Angreifer sich dessen Identität bemächtigt hat. Zu guter Letzt möchte auch das Fahrzeug selbst sicher sein, dass es von der korrekten Institution (also dem OEM) mit Schlüsselmaterial ausgestattet wurde und bspw. nicht von einem Angreifer dahingehend manipuliert wurde, dass es Daten unter falscher Identität versendet (sich also bspw. ein Fahrzeug eines ersten Herstellers als ein Fahrzeug eines zweiten Herstellers ausgibt). Zusammengefasst soll niemand (nicht der Hersteller, noch andere Teilnehmer, noch irgendein Angreifer) Nachrichten im Namen eines Datenlieferanten (hier: Fahrzeuges) versenden dürfen. Die zuvor genannten Anforderungen werden durch zumindest einige Ausführungsbeispiele der vorliegenden Offenbarung erfüllt, deren Umsetzung nachfolgend beispielhaft schrittweise beschrieben ist. Dabei kann das Fahrzeug beispielsweise dem Gerät 100 von Fig. 1a und/oder 1b, der Fahrzeughersteller (etwa ein Server des Fahrzeugherstellers) der zentralen Stelle 200 von Fig. 2a und/oder 2b und der Teilnehmer des Prozessnetzwerks einer Datenquelle 300 von Fig. 3a und/oder 3b entsprechen können.

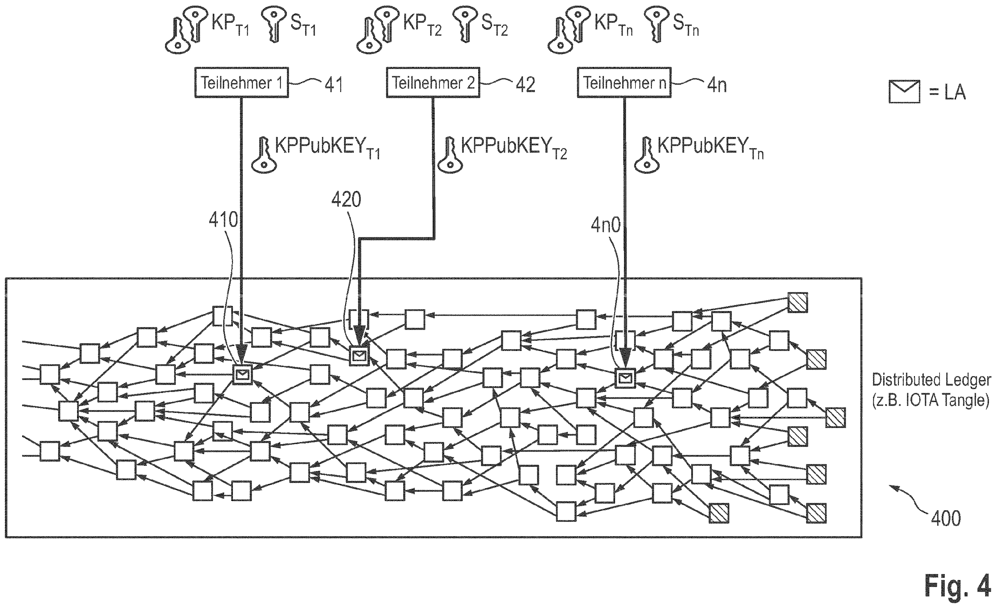

Abschnitt 1.1: Wie zuvor erwähnt, machen sich manche Ausführungsbeispiele der Erfindung die dezentrale Natur von Distributed Ledger Netzwerken zunutze. Fig. 4 zeigt eine schematische Übersicht von Schlüsseln und Briefkasten-Adressen im Distributed Ledger 400. Jeder Teilnehmer 41; 42; 4n eines solchen Netzwerkes (im vorliegenden Beispiel also ein Teilnehmer eines Lieferketten- Prozessnetzwerkes) kann sich einerseits für die vertrauenswürdige Authentisierung und andererseits für die Verschlüsselung an ihn gesendeter Informationen ein Paar aus privatem und dazugehörigem öffentlichen Schlüssel (nachfolgend "KP", für "KeyPair", genannt) KP_{T1}, KP_{T2}, KP_{Tn} erzeugen. Neben diesem Schlüsselpaar nutzt er einen weiteren privaten Schlüssel S_{T1}, S_{T2}, S_{Tn} (etwa das weitere kryptographische Geheimnis), welcher seine Identität in dem Netzwerk darstellt (auch "Seed" genannt; nachfolgend als "S" bezeichnet). Basierend auf diesem Schlüssel "S" leiten sich seine Adressen in dem Netzwerk ab (bei denen es sich technisch um öffentliche Schlüssel handelt). Eine dieser Adressen wird als Briefkasten-Adresse erkoren, an die Nachrichten, die an ihn gerichtet sind, gesendet werden können. Nachfolgend wird diese Adresse mit "LA" (für "Ledger-Address", Adresse im Ledger-Netzwerk) bezeichnet. Der eigene zur Verschlüsselung von Nachrichten verwendete öffentliche Schlüssel "\KPPubKey" (Öffentlicher Schlüssel des Schlüsselpaars) wird in diesem Briefkasten 410, 420, 4n0 abgelegt, so dass andere Teilnehmer verschlüsselte Nachrichten an den Eigentümer des Briefkastens senden können. Der dazugehörige private Schlüssel "KPPrivKey" bleibt dem Netzwerk verborgen. In manchen Ausführungsbeispielen können sowohl das Schlüsselpaar "KP", als auch die Briefkasten-Adresse "LA" nur einmal zur Teilnahme am Netzwerk erzeugt und nicht pro Prozessinstanz erzeugt werden.

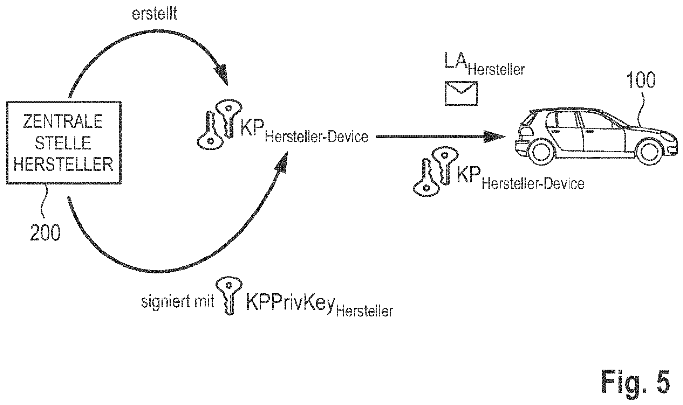

Abschnitt 1.2: Fig. 5 zeigt ein schematisches Diagramm einer Ausstattung eines Fahrzeugs 100 mit einem kryptografischen Geheimnis. Wenn ein loT-Gerät (also bspw. ein Fahrzeug) 100 gebaut wird, stattet es der Hersteller (etwa die zentrale Stelle 200 des Herstellers) mit einem frischen und einmaligen Paar aus privatem und dazugehörigem öffentlichen Schlüssel (nachfolgend "KP_{Hersteller-Device}" (Schlüsselpaar Hersteller-Gerät) betitelt, mit enthaltenem "KPPubKeY_{Hersteller-Device}" (öffentlicher Schlüssel des Schlüsselpaars Hersteller-Gerät) und "KPPrivKey_{Hersteller-Device}" (privater Schlüssel des Schlüsselpaars Hersteller-Gerät)) aus. Dieses Schlüsselpaar kann beispielsweise das kryptografische Geheimnis der Fign. 1a bis 2b sein. Diese Schlüssel (also dieses kryptographische Geheimnis) sind beispielsweise signiert von der Hersteller- eigenen Zertifizierungsstelle ("Certificate Authority", oder kurz: "CA"). Zusätzlich übergibt der Hersteller dem Gerät/Fahrzeug seinen eigene Briefkasten-Adresse LA_{Hersteller}. An dieser Adresse findet das loT-Gerät den öffentlichen Schlüssel des Herstellers ("KPPubKey_{Hersteller}"), welches es zur Prüfung der Signatur des Herstellers und zum Versenden von verschlüsselten Nachrichten an ihn verwendet.

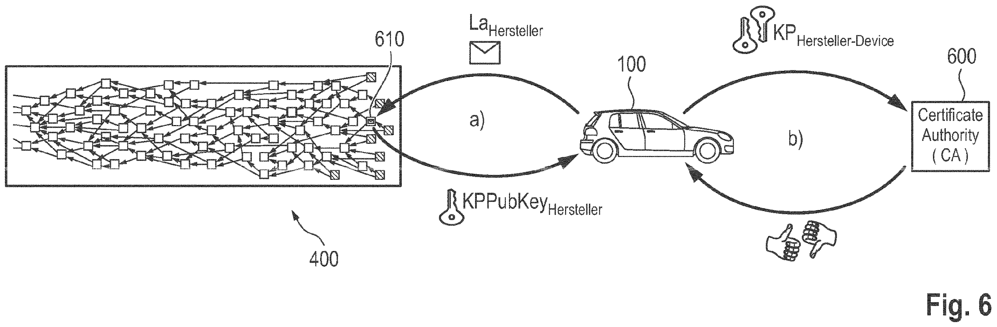

Abschnitt 1.3: Fig. 6 zeigt ein schematisches Diagramm einer Prüfung einer Signatur des kryptografischen Geheimnisses. Das Gerät/Fahrzeug 100 prüft anhand der Signatur und dem Wissen über bekannte vertrauenswürdige CAs 600, ob die installierten Schlüssel tatsächlich vom Hersteller 200 stammen (ob also die Signatur der Schlüssel passend und authentisch ist).

Dabei kann das Fahrzeug 100 etwa mit dem Wissen über die Adresse des elektronischen Postfachs (LA_{Hersteller}) 610 den öffentlichen Schlüssel des Herstellers (KP_{PubKeyHersteller}) aus dem Distributed Ledger 400 abrufen, und die Signatur das kryptographische Geheimnis (KP_{Hersteller-Device}) über die CA 600 prüfen lassen, welche bestätigen oder verneinen kann, ob die Signatur authentisch ist. Diese Logik wiederum ist beispielsweise sicher gegen Manipulationen geschützt, so dass ein Angreifer diese Prüfungen nicht abschalten oder verändern kann (bspw. durch Einbettung in ein sogenanntes "Trusted Execution Environment").

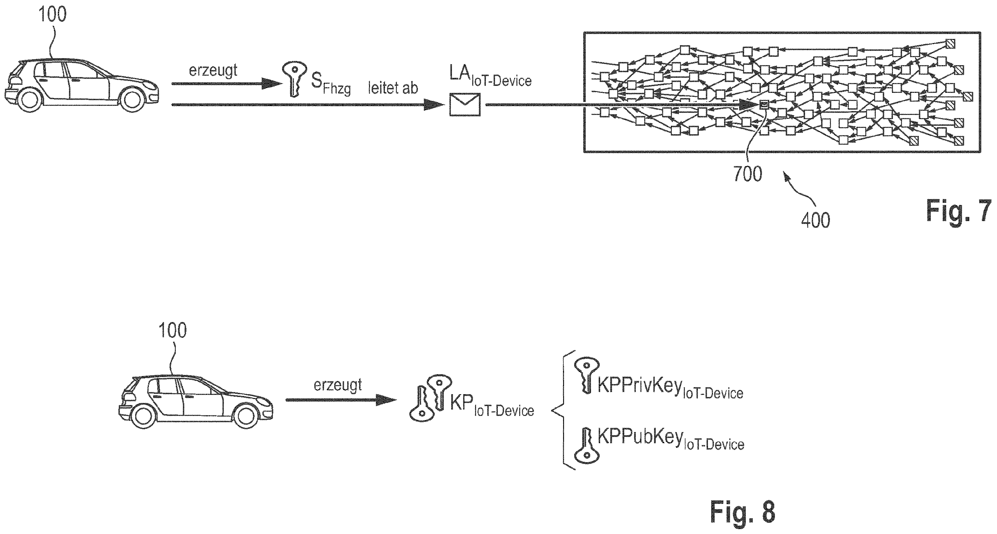

Abschnitt 1.4: Fig. 7 zeigt ein schematisches Diagramm einer Erzeugung einer Adresse eines elektronischen Postfachs 700. Fig. 8 zeigt ein schematisches Diagramm einer Erzeugung eines Schlüsselpaars durch das Fahrzeug 100. Das Gerät/Fahrzeug 100 erzeugt zur Teilnahme am Distributed Ledger Netzwerk:
a)einen eigenen Netzwerk-Schlüssel (Seed, siehe oben) "S_{Fhzg}",
b)eine von diesem Schlüssel abgeleitete Briefkasten-Adresse ("LA_{IoT-Device}", loT-Device steht für Gerät des Internet der Dinge, Vorliegend also das Fahrzeug) und
c) zur Authentisierung und Verschlüsselung von Nachrichten ebenfalls ein Schlüsselpaar ("KP_{Iot-Device}" mit "KPPubKey_{IoT- Device}" und "KPPrivKey_{IoT-Device}"). Da das Gerät/Fahrzeug dieses neue Schlüsselmaterial selbst erzeugt und nicht vom Hersteller erhält, besitzt nur das Fahrzeug Kenntnis über die privaten Schlüssel.

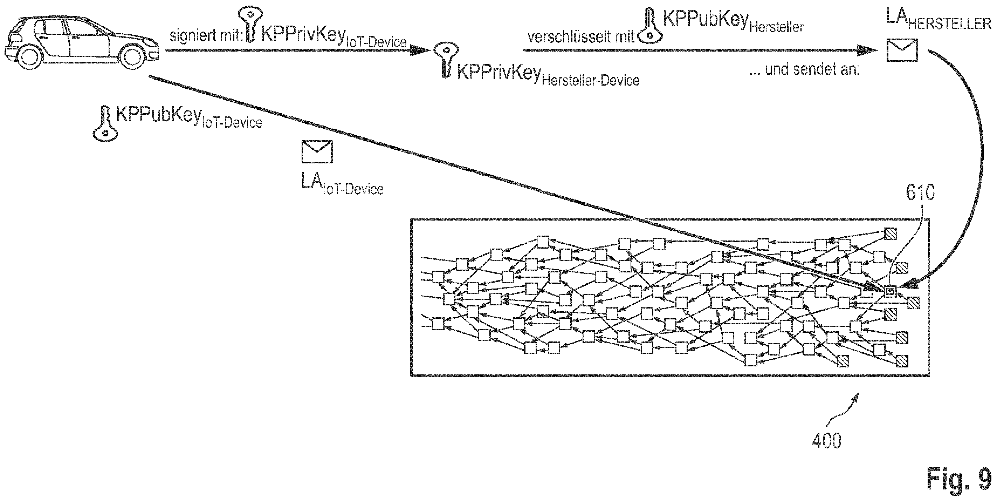

Abschnitt 1.5: Fig. 9 zeigt ein schematisches Diagramm eines Austausches von Informationen zwischen dem Fahrzeug und der zentralen Stelle. Das Gerät/Fahrzeug 100 signiert den vom Hersteller erhaltenen KPPrivKey_{Hersteller-Device}, mit seinem neu erzeugten KPPrivKey_{IoT-Device} (dem privaten Schlüssel des Fahrzeugs/Geräts 100), verschlüsselt diesen mit dem öffentlichen Schlüssel des Herstellers (KPPubKey_{Hersteller}, der öffentliche Schlüssel der zentralen Stelle) und sendet diesen - gemeinsam mit der eigenen Briefkasten-Adresse (LA_{IoT-Device}, die Adresse des elektronischen Postfachs des Fahrzeugs/Geräts 100) und dem eigenen selbst generierten öffentlichen Schlüssel KPPubKey_{IoT-Device} (dem öffentlichen Schlüssel des Fahrzeugs/Geräts 100) an die Briefkasten Adresse 610 des Herstellers (LA_{Hersteller}, die Adresse des elektronischen Postfachs der zentrealen Stelle) auf dem Distributed Ledger 400.

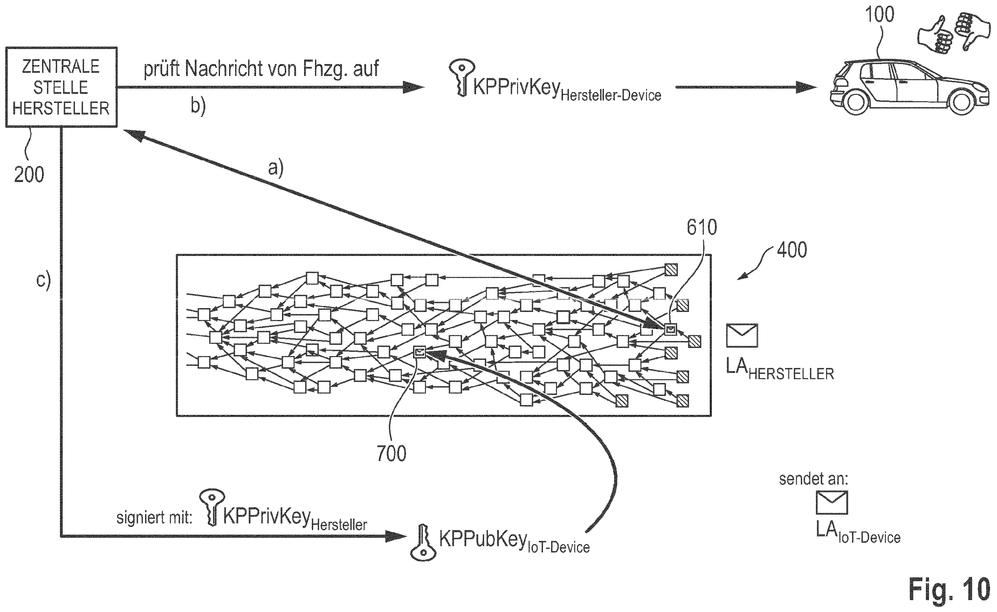

Abschnitt 1.6: Fig. 10 zeigt ein schematisches Diagramm einer Authentifizierung der Informationen des Fahrzeugs 100 durch die zentrale Stelle 200. Der Hersteller lädt die vom loT-Gerät/Fahrzeug übergebenen Daten aus seinem Briefkasten 610 (a), entschlüsselt sie mit seinem KPPrivKey_{Hersteller} und prüft (b), ob der geheime KPPrivKey_{Hersteller-Device} in der Nachricht enthalten ist. Damit kann er den Sender der Nachricht authentifizieren, da nur der echte Sender dieses Geheimnis kennt. Als Folge dieser erfolgreichen Prüfung signiert (c) der Hersteller 200 (die zentrale Stelle des Herstellers) wiederum den ebenfalls in dieser Nachricht übergebenen öffentlichen Schlüssel des Gerätes/Fahrzeuges 100 (KPPubKey_{IoT-Device}) und sendet diesen an die Briefkasten-Adresse des Gerätes/Fahrzeuges (LA_{IoT-Device}) 700. Anhand dieser Signatur können auch andere Teilnehmer die Authentizität des Datenlieferanten (also des Gerätes/Fahrzeuges) überprüfen. Zu diesem Zeitpunkt kann bei Bedarf KP_{Hersteller-Device}, also das vom Hersteller kreierte und dem loT-Gerät übergebene initiale Schlüsselpaar zurückgezogen ("revoked") werden, da es nicht mehr benötigt wird.

Abschnitt 1.7: Der Hersteller als Initiator des Prozesses gibt in der Regel die anderen Prozessteilnehmer und deren Rollen vor (gegebenenfalls werden im Fortgang des Prozesses weitere neue Teilnehmer auch durch andere Teilnehmer im Prozess definiert). In allen Fällen kann dann die Briefkasten-Adresse des neuen Teilnehmers an die Briefkästen (elektronische Postfächer) aller sonstigen Teilnehmer (etwa der Kommunikationspartner) propagiert werden, wodurch der neue Teilnehmer erfolgreich in den Prozess eingebunden werden kann und allen Prozessteilnehmern bekannt ist, da ihn erst dann alle anderen Teilnehmer (und somit auch das Gerät/Fahrzeug als hauptsächlicher Datenlieferant) adressieren und informieren können. Kennt ein hinzuzufügender Teilnehmer die Adressen der bereits involvierten Teilnehmer, kann er ein solches Onboarding (engl. für Einarbeiten) sogar selbstständig durchführen.

Abschnitt 1.8: Das Gerät/Fahrzeug kann von nun an authentifizierbare Daten durch Verschlüsselung gesichert an die Konsumenten bzw. die anderen Prozessteilnehmer senden. Diese Daten werden mit KP_{PrivKeyIoT-Device} signiert. Konsumenten dieser Daten können diese Signatur anhand des KP_{PubKeyIoT-Device} (der vom **Hersteller mit** KP_{PrivKeyHersteller} signiert ist) und KP_{PubKeyHersteller} überprüfen. Das Gerät verschlüsselt diese zu propagierenden Daten mit den jeweiligen öffentlichen Schlüsseln der Empfänger (KPPubKey_{X}) und sendet sie an die Briefkästen (LA_{X}) der Teilnehmer (oder speichert die zu propagierenden Daten in dem eigenen Briefkasten und benachrichtigt die Teilnehmer über die Briefkästen der Teilnehmer).

In folgenden wird eine mögliche Implementierung der Datenbereitstellung durch andere Prozessteilnehmer vorgestellt. In einem solchen Netzwerk kann es vorkommen, dass Daten nicht nur vom Haupt-Datenlieferanten (also dem loT-Gerät 100) geteilt werden, sondern auch die anderen Teilnehmer Daten beisteuern (bspw. Ergänzungen, wie Statusänderungen, etc.). In solchen Fällen kann folgendermaßen vorgegangen werden:
Abschnitt 2.1: Der Bereitsteller des Datums (nachfolgend "BD" genannt; mit eigenem Briefkasten LA_{BD}, etwa die Datenquelle 300 von Fign. 3a und/oder 3b) erzeugt eine neue Adresse auf dem Distributed Ledger (also eine Art weiteren Briefkasten, nachfolgend "LA_{dditionalDate}" genannt). Dies kann entweder pro zu verteilendes Datum oder einmal pro Prozessinstanz für mehrere Daten geschehen (grundsätzlich könnte dies auch nur einmal pro Prozessteilnehmer geschehen, da es in der Regel jedoch pro Prozessinstanz unterschiedliche Prozessteilnehmer gibt, sind die Daten dort vermischt). Wie später beschrieben, ist dieser Schritt optional.
Abschnitt 2.2: Der BD liest die Briefkasten-Adressen (LAX) aller anderen Prozessbeteiligten (etwa die Mehrzahl von Geräten der Fign. 3a und/oder 3b) aus seinem eigenen Briefkasten LA_{BD} aus (siehe die obigen Abschnitte 1.1 + 1.7) und ermittelt aus jedem Briefkasten den öffentlichen Schlüssel des jeweiligen Prozessteilnehmers und somit natürlich auch den des loT-Gerätes (oder im Beispiel den des Fahrzeuges).
Abschnitt 2.3: Der BD erzeugt jeweils eine Nachricht pro Prozessteilnehmer (Gerät der Mehrzahl von Geräten), welche die zu verteilende Information enthält und verschlüsselt diese mit dem jeweiligen öffentlichen Schlüssel des entsprechenden Teilnehmers. Diese Nachrichten werden beispielsweise alle an die Adresse LA_{AdditionalDate} gesendet.
Abschnitt 2.4: Der BD sendet eine Benachrichtigung über die neue in LA_{AdditionalDate} abgelegte Information (inkl. Adresse) an die Briefkästen aller Prozessbeteiligten (etwa die elektronischen Postfächer der Mehrzahl von Geräten)
Abschnitt 2.5: Das loT-Gerät kann diese Information gegebenenfalls noch zusätzlich in den eigenen Nachrichtenkanal veröffentlichen (zur Dokumentation, oder um weitere Empfänger zu erreichen, die BD gegebenenfalls nicht bekannt sind). Dieser Ansatz ermöglicht es auch anderen Prozessteilnehmern Daten beizusteuern. Der Umweg über die Adresse LA_{AdditionalDate} (siehe Abschnitte 2.1 und 2.4) ist (lediglich) zu Dokumentationszwecken vorgesehen. Anstatt die Nachrichten über ein neues Datum kanalisiert in LA_{AdditionalDate} abzulegen und die Prozessteilnehmer über eine Nachricht an ihre Briefkästen darüber zu informieren, ist es natürlich auch alternativ möglich, die neue Information direkt an die Briefkästen der Prozessteilnehmer zu propagieren.

Anmerkung: In Abschnitt 1.7 wird beschrieben, wie der Prozessinitiator die Prozessbeteiligten festlegt. Dies gibt diesem Prozessteilnehmer als "man-in-the-middle" (Mann in der Mitte) gewisse Steuerungsmöglichkeiten. Um dieses Risiko zu reduzieren, können die regelmäßig an solchen Prozessnetzwerken teilnehmenden Kommunikationspartner ihre öffentlichen Schlüssel und Briefkasten-Adressen auf direktem Wege austauschen.

Manche Ausführungsbeispiele schaffen ferner eine Steuerung der Sichtbarkeit auf "Datensatz"- und "Attribut"-Ebene. Die Sicherheit in Distributed Ledger Netzwerken kommt durch eine große Anzahl an dezentral gespeicherten Kopien der gleichen Daten zustande, so dass ein Angreifer einen Großteil des Netzwerkes bzw. der Kopien kompromittieren müsste, um die Daten des Netzwerkes zu manipulieren. Öffentliche DLT-Netzwerke neigen eher dazu, eine große Anzahl an Kopien aufzuweisen. Doch auch wenn Transparenz eine Grundidee solcher Netzwerke sind, möchte oder kann und gegebenenfalls darf man seine Daten jedoch nicht unverschlüsselt verteilen.

Durch die in der vorliegenden Offenbarung beschriebene Vorgehensweise kann die Sichtbarkeit von Daten sowohl auf Datensatz-Ebene (also für einen einzelnen Dateneintrag mit in der Regel mehreren zusammengehörenden Attributen), als auch auf Attributebene gesteuert werden. Sendet ein loT-Gerät also bspw. eine bestimmte Statusmeldung, kann es aufgrund fachlicher oder sicherheitstechnischer Anforderungen sein, dass nicht jeder diese gesamte Statusmeldung sehen darf, sondern diese nur für einzelne Teilnehmer des Prozessnetzwerkes entschlüsselbar ist (Steuerung der Sichtbarkeit auf Datensatzebene) oder aber zwar die Meldung an sich für alle Teilnehmer des Netzwerkes sichtbar ist, einzelne Attribute einer solchen Meldung (bspw. die GPS-Position (Position gemäß eines Globalen Positionierungssystems), oder ähnliches) jedoch nur für ausgewählte Teilnehmer einsehbar sein dürfen (Steuerung der Sichtbarkeit auf Attributebene). Genauso sind natürlich Mischformen möglich. Da die Daten mit dem jeweiligen öffentlichen Schlüssel eines jeden Teilnehmers verschlüsselt sind, kann nur der jeweilige Teilnehmer diese (mit seinem privaten Schlüssel) entschlüsseln. So kann der Datenerzeuger/- verteiler auf Basis von Rollen, Sichtbarkeitsgruppen oder Einzelberechtigungen unter Verwendung des passenden öffentlichen Schlüssels steuern, welche Attribute für welchen Teilnehmer/Rolle einsehbar sein sollen, da die Datenpakete jeweils einzeln verschlüsselt verteilt werden.

Gibt es hierbei große Schnittmengen, d.h. haben verschiedene Prozessteilnehmer gleiche Sichtbarkeitsberechtigungen für gleiche Datensätze oder Attribute, macht es Sinn, solche Berechtigungen mit einem gemeinsamen Schlüsselpaar zu versehen, um so die Datenredundanz auf dem Austauschmedium (also bspw. dem Distributed Ledger) zu reduzieren.

Dies geschieht beispielsweise folgendermaßen:
Abschnitt 3.1: Der Bereitsteller des Datums (nachfolgend weiterhin "BD" genannt) erzeugt für jede Rolle/Rechtsgruppe einen symmetrischen Schlüssel (SGX) und einen Gruppen-Briefkasten (LA-GX) und sendet den Schlüssel und die Adresse von LA-GX verschlüsselt mit dem öffentlichen Schlüssel des jeweiligen Teilnehmers an diesen Gruppenteilnehmer.
Abschnitt 3.2: Der BD verschlüsselt Daten und/oder Attribute auf Basis von Rollen/Rechtegruppen. Die für mehrere Teilnehmer einsehbaren Daten verschlüsselt er mit dem Gruppenschlüssel SGX. Der Rest wird weiterhin teilnehmerbezogen mit dem öffentlichen Schlüssel des jeweiligen Teilnehmers verschlüsselt.
Abschnitt 3.3: Der BD sendet die mit dem Gruppenschlüssel verschlüsselten Daten an den Gruppen-Briefkasten LA-GX und die mit den öffentlichen Schlüsseln der Teilnehmer verschlüsselten Daten an die Briefkästen der Teilnehmer.
Abschnitt 3.4: Jeder Teilnehmer prüft nicht nur seinen persönlichen Briefkasten, sondern auch den der Gruppe auf neue Nachrichten. Die Nachrichten des Gruppen-Briefkastens entschlüsselt er mit dem erhaltenen Gruppenschlüssel, Nachrichten an seinen persönlichen Briefkasten weiterhin mit seinem privaten Schlüssel. Anschließend fügt er die über die unterschiedlichen Kanäle erhaltenen Daten gegebenenfalls wieder zusammen.

Manche Ausführungsbeispiele der vorliegenden Offenbarung schaffen ferner eine Reduzierung der Angreifbarkeit durch zufällige Verteilung. DLT Netzwerke zeichnen sich u.a. dadurch aus, dass zahlreiche dezentralisierte Eintrittspunkte in das Netzwerk (sogenannte "Nodes", oder "Knotenpunkte") existieren. Jeder Knotenpunkt (zumindest die sog. "Full Nodes", vollen Knoten) speichern die gesamte Transaktionshistorie des Netzwerkes und sichern dieses somit vor Manipulationen. Möchte ein Teilnehmer nun ein solches Netzwerk zur Datenspeicherung benutzen, wählt er einen Knotenpunkt aus und übergibt ihm die zu speichernden Daten.

Ein Knotenpunkt kann dabei die Daten nicht verändern, wenn er sie nicht selbst erzeugt hat (da diese in der Regel mit dem privaten Schlüssel des Senders signiert sind und somit eine Manipulation schnell auffallen würde), er könnte jedoch einzelne ihm übergebene Transaktionen vor dem Einfügen in den Ledger verwerfen.

Wenn zudem für alle Transaktionen, die ein loT-Gerät emittiert der gleiche Knotenpunkt als Eintrittspunkt in das DLT Netzwerk gewählt würde, könnten externe Angreifer gegebenenfalls diese Nodes identifizieren und durch einen Angriff außer Gefecht setzen und somit das Verteilen von Daten des betroffenen loT-Gerätes unterbinden. Um die Manipulationsgefahr durch solche Angriffe zu minimieren, werden die emittierten Transaktionen in manchen Ausführungsbeispielen durch das loT- Gerät an jeweils zufällig ausgewählte Knotenpunkte (d.h. an eine zufällige Auswahl von ein oder mehreren Knoten der Mehrzahl von Knoten) zur Aufnahme in den Ledger abgelegt, so dass die Kommunikation zwischen dem Gerät und dem Netzwerk nicht vorhersagbar ist.

Zumindest manche Ausführungsbeispiele können abseits von Distributed Ledger Netzwerken genutzt werden. Wie bereits oben beschrieben, ist die Nutzung von Ausführungsbeispielen der vorliegenden Offenbarung nicht zwingend an Distributed Ledger Netzwerke gekoppelt. Auch in einer Umgebung, in welcher der Datenaustausch über eine zentralisierte Architektur stattfindet, kann mit der beschriebenen Vorgehensweise für einen gesicherten Schlüsselaustausch die Authentizität von Nachrichten und deren Sendern sichergestellt werden. Dabei kann die Sicherheit reduziert sein, da die zentrale Komponente als "man in the middle" weitreichendere Eingriffsmöglichkeiten besitzt, als in einer dezentralisierten Netzwerkstruktur. Gegenüber zentralen "Trust Authorities" bieten Ausführungsbeispiele, insbesondere Ausführungsbeispiele, die auf dezentralen Datenbanken basieren, eine deutlich gesteigerte Immunität für äußere und bösartige Einflüsse mit. Ausführungsbeispiele können beispielsweise in der V2X-Kommunikation (Kommunikation zwischen Fahrzeugen (engl. Vehicle) und anderen Kommunikationspartnern, wobei das X für verschiedene Arten von Kommunikationspartnern steht) genutzt werden. Ausführungsbeispiele können ferner in Fällen, in denen Daten bspw. in Prozessnetzwerken mit Partnern/(Sub-)Lieferanten ausgetauscht werden (in der Lieferkette).

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung für ein Gerät
- 12: Schnittstelle
- 14: Ein oder mehrere Prozessoren
- 20: Vorrichtung für eine zentrale Stelle
- 22: Schnittstelle
- 24: Ein oder mehrere Prozessoren
- 30: Vorrichtung für eine Datenquelle
- 32: Schnittstelle
- 34: Ein oder mehrere Prozessoren
- 41, 42, 4n: Teilnehmer eines Prozessnetzwerks
- 100: Gerät
- 110: Erhalten eines kryptographischen Geheimnisses
- 120: Erhalten eines öffentlichen Schlüssels einer zentralen Stelle
- 125: Prüfen einer Signatur des kryptographischen Geheimnisses
- 130: Erzeugen eines kryptographischen Schlüsselpaars
- 135: Erzeugen einer Adresse eines elektronischen Postfachs des Geräts
- 140: Signieren des kryptographischen Geheimnisses
- 150: Verschlüsseln des signierten kryptographischen Geheimnisses
- 160: Bereitstellen des verschlüsselten signierten kryptographischen Geheimnisses, der Adresse des elektronischen Postfachs des Geräts und eines öffentlichen Schlüssels des Geräts
- 170: Erhalten einer signierten Version des öffentlichen Schlüssels des Geräts
- 175: Bereitstellen der signierten Version des öffentlichen Schlüssels des Geräts
- 180: Bereitstellen der Adresse des elektronischen Postfachs des Geräts
- 190: Erhalten von ein oder mehreren Nachrichten
- 195: Entschlüsseln der ein oder mehreren Nachrichten
- 200: Zentrale Stelle
- 205: Signieren eines kryptographischen Geheimnisses
- 210: Bereitstellen des kryptographischen Geheimnisses für ein Gerät
- 220: Bereitstellen eines öffentlichen Schlüssels der zentralen Stelle für das Gerät
- 230: Erhalten einer signierten und verschlüsselten Version des kryptographischen Geheimnisses, einer Adresse eines elektronischen Postfachs des Geräts und eines öffentlichen Schlüssels des Geräts von dem Gerät

- 240: Prüfen der signierten und verschlüsselten Version des kryptographischen Geheimnisses
- 250: Verschlüsseltes Kommunizieren mit dem Gerät
- 260: Signieren des öffentlichen Schlüssels des Geräts
- 300: Datenquelle
- 310: Erhalten von Adressen von elektronischen Postfächern von Geräten
- 320: Erhalten von kryptographischen Schlüsseln der Geräte
- 330: Erzeugen von ein oder mehreren Nachrichten für die Geräte
- 335: Signieren der ein oder mehreren Nachrichten
- 340: Bereitstellen der ein oder mehreren Nachrichten über ein elektronisches Postfach
- 350: Bereitstellen von Benachrichtigungen
- 400: Distributed Ledger
- 410, 420, 4n0: Briefkarten eines Teilnehmers auf dem Distributed Ledger
- 600: Vertrauenswürdige Certificate Authority
- 610: Elektronisches Postfach des Herstellers
- 700: Elektronisches Postfach des Fahrzeugs

## Patentansprüche

1. Ein computer-implementiertes Verfahren zum Austausch von kryptographischen Schlüsselinformationen zwischen einem Gerät (100) und einer zentralen Stelle (200), wobei das Verfahren durch das Gerät ausgeführt wird, das Verfahren umfassend:
Erhalten (110) eines kryptographischen Geheimnisses, wobei das kryptographische Geheimnis der zentralen Stelle bekannt ist, wobei das Gerät das kryptographische Geheimnis von der zentralen Stelle erhält;
Erhalten (120) eines öffentlichen Schlüssels der zentralen Stelle;
Erzeugen (130) eines kryptographischen Schlüsselpaars für das Gerät mit einem privaten Schlüssel des Geräts und einem öffentlichen Schlüssel des Geräts;
Signieren (140) des kryptographischen Geheimnisses mit dem privaten Schlüssel des Geräts;
Verschlüsseln (150) des mit dem privaten Schlüssel des Geräts signierten kryptographischen Geheimnisses mit dem öffentlichen Schlüssel der zentralen Stelle;
Bereitstellen (160) des verschlüsselten und signierten kryptographischen Geheimnisses, einer Adresse eines elektronischen Postfachs des Geräts und des öffentlichen Schlüssels des Geräts für die zentrale Stelle über ein elektronisches Postfach der zentralen Stelle, wobei das verschlüsselte und signierte kryptographische Geheimnis zu der zentralen Stelle übermittelt wird, um gegenüber der zentralen Stelle zu beweisen, dass das Gerät über das kryptographische Geheimnis verfügt.

2. Das Verfahren gemäß Anspruch 1, wobei das Erhalten (120) des öffentlichen Schlüssels der zentralen Stelle ein Erhalten einer Adresse des elektronischen Postfachs der zentralen Stelle und ein Abrufen des öffentlichen Schlüssels der zentralen Stelle aus dem elektronischen Postfach der zentralen Stelle umfasst.

3. Das Verfahren gemäß einem der Ansprüche 1 oder 2, wobei das elektronische Postfach der zentralen Stelle und das elektronische Postfach des Geräts über eine verteilte Datenbank zugänglich sind.

4. Das Verfahren gemäß Anspruch 3, wobei die verteilte Datenbank auf einer Distributed-Ledger-Technologie basiert, wobei Adressen des elektronischen Postfachs der zentralen Stelle und des elektronischen Postfachs des Geräts Adressen auf dem Distributed Ledger sind.

5. Das Verfahren gemäß einem der Ansprüche 3 oder 4, wobei die verteilte Datenbank auf einer Mehrzahl von Knoten basiert, wobei das Bereitstellen und/oder das Erhalten von Daten über ein elektronisches Postfach über die verteilte Datenbank auf einer zufälligen Auswahl von ein oder mehreren Knoten der Mehrzahl von Knoten für das Bereitstellen und/oder Erhalten der Informationen basiert.

6. Das Verfahren gemäß einem der Ansprüche 1 bis 5, wobei das kryptographische Geheimnis durch einen privaten Schlüssel der zentralen Stelle signiert ist, wobei das Verfahren ferner ein Prüfen (125) der Signatur des kryptographischen Geheimnisses basierend auf dem öffentlichen Schlüssel der zentralen Stelle umfasst.

7. Das Verfahren gemäß Anspruch 6, wobei das Prüfen der Signatur und/oder das Erzeugen des kryptographischen Schlüsselpaars zumindest teilweise in einer vertrauenswürdigen Ausführungsumgebung des Geräts durchgeführt wird.

8. Das Verfahren gemäß einem der Ansprüche 1 bis 7, umfassend Erzeugen (135) der Adresse des elektronischen Postfachs des Geräts basierend auf einem weiteren kryptographischen Geheimnis.

9. Das Verfahren gemäß einem der Ansprüche 1 bis 8, umfassend Erhalten (170) einer durch die zentrale Stelle signierten Version des öffentlichen Schlüssels des Geräts von der zentralen Stelle, und Bereitstellen (175) der signierten Version des öffentlichen Schlüssels des Geräts über das elektronische Postfach des Geräts.

10. Programm mit einem Programmcode zum Durchführen des Verfahrens gemäß einem der vorhergehenden Ansprüche, wenn der Programmcode auf einem Computer, einem Prozessor, einem Kontrollmodul oder einer programmierbaren Hardwarekomponente ausgeführt wird.

11. Ein computer-implementiertes Verfahren zum Austausch von kryptographischen Schlüsselinformationen zwischen einem Gerät und einer zentralen Stelle, wobei das Verfahren durch die zentrale Stelle ausgeführt wird, das Verfahren umfassend:
Bereitstellen (210) eines kryptographischen Geheimnisses für das Gerät;
Bereitstellen (220) eines öffentlichen Schlüssels der zentralen Stelle für das Gerät;
Erhalten (230) einer mit dem öffentlichen Schlüssel der zentralen Stelle verschlüsselten und mit einem privaten Schlüssel des Geräts signierten Version des kryptographischen Geheimnisses, einer Adresse eines elektronischen Postfachs des Geräts, und eines öffentlichen Schlüssels des Geräts von dem Gerät, wobei das verschlüsselte und signierte kryptographische Geheimnis von dem Gerät zu der zentralen Stelle übermittelt wird, um gegenüber der zentralen Stelle zu beweisen, dass das Gerät über das kryptographische Geheimnis verfügt;
Prüfen (240) der erhaltenen Version des kryptographischen Geheimnisses basierend auf einem privaten Schlüssel der zentralen Stelle und basierend auf dem kryptographischen Geheimnis;
Verschlüsseltes Kommunizieren (250) mit dem Gerät über das elektronische Postfach des Geräts basierend auf dem öffentlichen Schlüssel des Geräts.

12. Das Verfahren gemäß Anspruch 11, umfassend Signieren (260) des öffentlichen Schlüssels des Geräts mit dem privaten Schlüssel der zentralen Stelle, und Bereitstellen (265) des signierten öffentlichen Schlüssels für das Gerät.

13. Programm mit einem Programmcode zum Durchführen zumindest des Verfahrens gemäß einem der Ansprüche 11 oder 12, wenn der Programmcode auf einem Computer, einem Prozessor, einem Kontrollmodul oder einer programmierbaren Hardwarekomponente ausgeführt wird.

14. Eine computerimplementierte Vorrichtung (10) zum Austausch von kryptographischen Schlüsselinformationen zwischen einem Gerät und einer zentralen Stelle, wobei die Vorrichtung für den Austausch der kryptographischen Schlüsselinformation von Seiten des Geräts geeignet ist, die Vorrichtung umfassend:
eine Schnittstelle (12) zur Kommunikation mit der zentralen Stelle; und
ein oder mehrere Prozessoren (14) ausgebildet zum Ausführen des Verfahrens gemäß einem der Ansprüche 1 bis 9.

15. Eine computerimplementierte Vorrichtung (20) zum Austausch von kryptographischen Schlüsselinformationen zwischen einem Gerät und einer zentralen Stelle, wobei die Vorrichtung für den Austausch der kryptographischen Schlüsselinformation von Seiten der zentralen Stelle geeignet ist, die Vorrichtung umfassend:
eine Schnittstelle (22) zur Kommunikation mit dem Gerät; und
ein oder mehrere Prozessoren (24) ausgebildet zum Ausführen des Verfahrens gemäß Anspruch 11 oder 12.

## Claims

1. A computer-implemented method for exchanging cryptographic key information between an apparatus (100) and a central entity (200), wherein the method is executed by the apparatus, the method comprising:
receiving (110) a cryptographic secret, wherein the cryptographic secret is known to the central entity, wherein the apparatus receives the cryptographic secret from the central entity;
receiving (120) a public key of the central entity;
generating (130) a cryptographic key pair for the apparatus, comprising a private key of the apparatus and a public key of the apparatus;
signing (140) the cryptographic secret using the private key of the apparatus;
encrypting (150) the cryptographic secret signed using the private key of the apparatus using the public key of the central entity;
providing (160) the encrypted and signed cryptographic secret, an address of an electronic mailbox of the apparatus and the public key of the apparatus to the central entity via an electronic mailbox of the central entity, wherein the encrypted and signed cryptographic secret is transmitted to the central entity to prove to the central entity that the apparatus has the cryptographic secret.

2. The method according to claim 1, wherein receiving (120) the public key of the central entity comprises receiving an address of the electronic mailbox of the central entity and retrieving the public key of the central entity from the electronic mailbox of the central entity.

3. The method according to either of claims 1 or 2, wherein the electronic mailbox of the central entity and the electronic mailbox of the apparatus are accessible via a distributed database.

4. The method according to claim 3, wherein the distributed database is based on a distributed ledger technology, wherein addresses of the electronic mailbox of the central entity and of the electronic mailbox of the apparatus are addresses on the distributed ledger.

5. The method according to either of claims 3 or 4, wherein the distributed database is based on a plurality of nodes, wherein providing and/or receiving data via an electronic mailbox via the distributed database is based on a random selection of one or more nodes of the plurality of nodes for providing and/or receiving the information.

6. The method according to any of claims 1 to 5, wherein the cryptographic secret is signed by a private key of the central entity, wherein the method further comprises verifying (125) the signature of the cryptographic secret on the basis of the public key of the central entity.

7. The method according to claim 6, wherein verifying the signature and/or generating the cryptographic key pair is performed at least partially in a trusted execution environment of the apparatus.

8. The method according to any of claims 1 to 7, comprising generating (135) the address of the electronic mailbox of the apparatus on the basis of a further cryptographic secret.

9. The method according to any of claims 1 to 8, comprising receiving (170) a version of the public key of the apparatus signed by the central entity from the central entity, and providing (175) the signed version of the public key of the apparatus via the electronic mailbox of the apparatus.

10. A program having a program code for performing the method according to any of the preceding claims if the program code is executed on a computer, a processor, a control module, or a programmable hardware component.

11. A computer-implemented method for exchanging cryptographic key information between an apparatus and a central entity, wherein the method is executed by the central entity, the method comprising:
providing (210) a cryptographic secret for the apparatus;
providing (220) a public key of the central entity for the apparatus;
receiving (230) a version of the cryptographic secret encrypted using the public key of the central entity and signed using a private key of the apparatus, an address of an electronic mailbox of the apparatus, and a public key of the apparatus from the apparatus, wherein the encrypted and signed cryptographic secret is transmitted from the apparatus to the central entity to prove to the central entity that the apparatus has the cryptographic secret;
verifying (240) the received version of the cryptographic secret on the basis of a private key of the central entity and on the basis of the cryptographic secret;
communicating (250) in an encrypted manner with the apparatus via the electronic mailbox of the apparatus on the basis of the public key of the apparatus.

12. The method according to claim 11, comprising signing (260) the public key of the apparatus using the private key of the central entity, and providing (265) the signed public key for the apparatus.

13. A program having a program code for performing at least the method according to either of claims 11 or 12 if the program code is executed on a computer, a processor, a control module, or a programmable hardware component.

14. A computer-implemented device (10) for exchanging cryptographic key information between an apparatus and a central entity, wherein the device is suitable for exchanging the cryptographic key information from the apparatus side, the device comprising:
an interface (12) for communication with the central entity; and
one or more processors (14) configured to execute the method according to any of claims 1 to 9.

15. A computer-implemented device (20) for exchanging cryptographic key information between an apparatus and a central entity, wherein the device is suitable for exchanging the cryptographic key information from the central entity side, the device comprising:
an interface (22) for communication with the apparatus; and
one or more processors (24) configured to execute the method according to claim 11 or 12.

## Revendications

1. Procédé mis en œuvre par ordinateur pour échanger des informations de clé cryptographique entre un appareil (100) et un emplacement central (200), dans lequel le procédé est exécuté par l'appareil, le procédé comprenant :
l'obtention (110) d'un secret cryptographique, dans lequel le secret cryptographique est connu de l'emplacement central, dans lequel l'appareil obtient le secret cryptographique de l'emplacement central ;
l'obtention (120) d'une clé publique de l'emplacement central ;
la génération (130) d'une paire de clés cryptographiques pour l'appareil, comportant une clé privée de l'appareil et une clé publique de l'appareil ;
la signature (140) du secret cryptographique avec la clé privée de l'appareil ;
le chiffrement (150) du secret cryptographique signé avec la clé privée de l'appareil avec la clé publique de l'emplacement central ;
la fourniture (160) du secret cryptographique chiffré et signé, d'une adresse d'une boîte aux lettres électronique de l'appareil et de la clé publique de l'appareil à l'emplacement central par l'intermédiaire d'une boîte aux lettres électronique de l'emplacement central, dans lequel le secret cryptographique chiffré et signé est transmis à l'emplacement central afin de prouver à l'emplacement central que l'appareil dispose du secret cryptographique.

2. Procédé selon la revendication 1, dans lequel l'obtention (120) de la clé publique de l'emplacement central comprend une obtention d'une adresse de la boîte aux lettres électronique de l'emplacement central et une récupération de la clé publique de l'emplacement central à partir de la boîte aux lettres électronique de l'emplacement central.

3. Procédé selon l'une des revendications 1 ou 2, dans lequel la boîte aux lettres électronique de l'emplacement central et la boîte aux lettres électronique de l'appareil sont accessibles par l'intermédiaire d'une base de données distribuée.

4. Procédé selon la revendication 3, dans lequel la base de données distribuée est basée sur une technologie de registre distribué, dans lequel les adresses de la boîte aux lettres électronique de l'emplacement central et de la boîte aux lettres électronique de l'appareil sont des adresses sur le registre distribué.

5. Procédé selon l'une des revendications 3 ou 4, dans lequel la base de données distribuée est basée sur une pluralité de nœuds, dans lequel la fourniture et/ou l'obtention de données par l'intermédiaire d'une boîte aux lettres électronique par l'intermédiaire de la base de données distribuée sont basées sur une sélection aléatoire d'un ou plusieurs nœuds de la pluralité de nœuds pour la fourniture et/ou l'obtention des informations.

6. Procédé selon l'une des revendications 1 à 5, dans lequel le secret cryptographique est signé par une clé privée de l'emplacement central, dans lequel le procédé comprend en outre une vérification (125) de la signature du secret cryptographique sur la base de la clé publique de l'emplacement central.

7. Procédé selon la revendication 6, dans lequel la vérification de la signature et/ou la génération de la paire de clés cryptographiques sont effectuées au moins en partie dans un environnement d'exécution de confiance de l'appareil.

8. Procédé selon l'une des revendications 1 à 7, comprenant la génération (135) de l'adresse de la boîte aux lettres électronique de l'appareil sur la base d'un autre secret cryptographique.

9. Procédé selon l'une des revendications 1 à 8, comprenant l'obtention (170) auprès de l'emplacement central d'une version signée par l'emplacement central de la clé publique de l'appareil, et la fourniture (175) de la version signée de la clé publique de l'appareil par l'intermédiaire de la boîte aux lettres électronique de l'appareil.

10. Programme comportant un code de programme permettant d'effectuer le procédé selon l'une des revendications précédentes, lorsque le code de programme est exécuté sur un ordinateur, un processeur, un module de commande ou un composant matériel programmable.

11. Procédé mis en œuvre par ordinateur pour échanger des informations de clé cryptographique entre un appareil et un emplacement central, dans lequel le procédé est exécuté par l'emplacement central, le procédé comprenant :
la fourniture (210) d'un secret cryptographique pour l'appareil ;
la fourniture (220) d'une clé publique de l'emplacement central pour l'appareil ;
l'obtention (230) d'une version du secret cryptographique chiffrée avec la clé publique de l'emplacement central et signée avec une clé privée de l'appareil, d'une adresse d'une boîte aux lettres électronique de l'appareil, et d'une clé publique de l'appareil à partir de l'appareil, dans lequel le secret cryptographique chiffré et signé est transmis de l'appareil à l'emplacement central pour prouver à l'emplacement central que l'appareil dispose du secret cryptographique ;
la vérification (240) de la version obtenue du secret cryptographique sur la base d'une clé privée de l'emplacement central et sur la base du secret cryptographique ;
la communication chiffrée (250) avec l'appareil par l'intermédiaire de la boîte aux lettres électronique de l'appareil basée sur la clé publique de l'appareil.

12. Procédé selon la revendication 11, comprenant la signature (260) de la clé publique de l'appareil avec la clé privée de l'emplacement central, et la fourniture (265) de la clé publique signée pour l'appareil.

13. Programme comportant un code de programme permettant de mettre en œuvre au moins le procédé selon l'une des revendications 11 ou 12, lorsque le code de programme est exécuté sur un ordinateur, un processeur, un module de commande ou un composant matériel programmable.

14. Dispositif mis en œuvre par ordinateur (10) pour échanger des informations de clé cryptographique entre un appareil et un emplacement central, dans lequel le dispositif est adapté à l'échange des informations de clé cryptographique de la part de l'appareil, le dispositif comprenant :
une interface (12) pour la communication avec l'emplacement central ; et
un ou plusieurs processeurs (14) conçus pour exécuter le procédé selon l'une des revendications 1 à 9.

15. Dispositif mis en œuvre par ordinateur (20) pour échanger des informations de clé cryptographique entre un appareil et un emplacement central, dans lequel le dispositif est adapté pour l'échange des informations de clé cryptographique de la part de l'emplacement central, le dispositif comprenant :
une interface (22) pour communiquer avec l'appareil ; et
un ou plusieurs processeurs (24) conçus pour exécuter le procédé selon la revendication 11 ou 12.
